# EUROPEAN PATENT APPLICATION

(11) **EP 4 745 703 A1**
(43) Date of publication of application: **20.05.2026**
(21) Application number: 25216086.6
(22) Date of filing: 14.11.2025
(51) Int. Cl.: G05D 1/224, G05D 1/227, G05D 1/698, A01B 69/00

(54) **OPERATION CONTROL METHOD, OPERATION CONTROL PROGRAM, AND OPERATION CONTROL SYSTEM**

(30) Priority: 15.11.2024 JP 2024199779
(71) Applicant: Yanmar Holdings Co., Ltd., Osaka-shi, Osaka (JP)
(72) Inventor: NISHIBEPPU, Shinya, Okayama-shi (JP); NISHII, Yasuto, Okayama-shi (JP); IWAMURA, Keisuke, Okayama-shi (JP); MURAYAMA, Masaaki, Okayama-shi (JP); MITANI, Hideki, Okayama-shi (JP); ISHIDA, Hiroyasu, Okayama-shi (JP); IMAI, Tomoki, Okayama-shi (JP)
(74) Representative: Sekiguchi, Kazuya

(57) **Abstract**

[Problem] Provided are an operation control method, an operation control program, and an operation control system capable of appropriately controlling an operation of a work vehicle that performs agricultural work.

[Solution] An automatic traveling system 1 includes: a setting processing unit 412 that sets, to operation terminals 20 and 30 or an operator, an authority to give an instruction related to automatic traveling to a work vehicle 10 on the basis of a predetermined condition; and a control processing unit 111 that operates the work vehicle 10 on the basis of an instruction given from the operation terminals 20 and 30 or the operator to which the authority is set.

## Description

### TECHNICAL FIELD

The present invention relates to a technique of controlling an operation of a work vehicle capable of automatic traveling.

### BACKGROUND ART

Conventionally, there is known a technique of causing automatic traveling of a work vehicle that performs agricultural work in a field in accordance with a preset target route. In addition, a technique of remotely monitoring a work vehicle during automatic traveling is also known (see, for example, Patent Document 1).

### PRIOR ART DOCUMENT

### PATENT DOCUMENT

Patent Document 1: JP-B2-6253678

### SUMMARY OF INVENTION

### TECHNICAL PROBLEM

In a system capable of remotely monitoring a work vehicle, a short-distance operation terminal such as a remote controller that can be operated near the work vehicle and a long-distance operation terminal that can be remotely operated in a remote place may be used in combination. In a case where a plurality of operation terminals are used in combination, and the work vehicle can be operated from each operation terminal, there arises a problem that the work vehicle performs an operation not intended by an operator.

An object of the present invention is to provide an operation control method, an operation control program, and an operation control system capable of appropriately controlling an operation of a work vehicle that performs agricultural work.

### SOLUTION TO PROBLEM

An operation control method according to the present invention is a method for controlling an operation of a work vehicle that performs agricultural work by automatic traveling. The operation control method includes: setting, to an operation terminal or an operator, an authority to give an instruction related to automatic traveling to the work vehicle on the basis of a predetermined condition; and operating the work vehicle on the basis of an instruction given from the operation terminal or the operator to which the authority is set.

In addition, an operation control program according to the present invention is a program for controlling an operation of a work vehicle that performs agricultural work by automatic traveling. The operation control program is a program for causing one or a plurality of processors to execute: setting, to an operation terminal or an operator, an authority to give an instruction related to automatic traveling to the work vehicle on the basis of a predetermined condition; and operating the work vehicle on the basis of an instruction given from the operation terminal or the operator to which the authority is set.

In addition, an operation control system according to the present invention is a system for controlling an operation of a work vehicle that performs agricultural work by automatic traveling. The operation control system includes: a setting processing unit that sets, to an operation terminal or an operator, an authority to give an instruction related to automatic traveling to the work vehicle on the basis of a predetermined condition; and an operation processing unit that operates the work vehicle on the basis of an instruction given from the operation terminal or the operator to which the authority is set.

### ADVANTAGEOUS EFFECTS OF INVENTION

According to the present invention, it is possible to provide an operation control method, an operation control program, and an operation control system capable of appropriately controlling an operation of a work vehicle that performs agricultural work.

### BRIEF DESCRIPTION OF DRAWINGS

Fig. 1 is a view showing an outline of an automatic traveling system according to an embodiment of the present invention;
Fig. 2 is a block diagram showing a configuration of the automatic traveling system according to the embodiment of the present invention;
Fig. 3 is an external view showing an example of a work vehicle according to the embodiment of the present invention;
Fig. 4 is a diagram showing an example of a map screen displayed on an operation terminal according to the embodiment of the present invention;
Fig. 5 is a diagram showing an example of a map screen displayed on the operation terminal according to the embodiment of the present invention;
Fig. 6 is a diagram showing an example of a map screen displayed on the operation terminal according to the embodiment of the present invention;
Fig. 7A is a diagram showing an example of an operation screen displayed on the operation terminal according to the embodiment of the present invention;
Fig. 7B is a diagram showing an example of an operation screen displayed on the operation terminal according to the embodiment of the present invention;
Fig. 7C is a diagram showing an example of an operation screen displayed on the operation terminal according to the embodiment of the present invention;
Fig. 8 is a diagram showing an example of a map screen and an operation screen displayed on the operation terminal according to the embodiment of the present invention;
Fig. 9 is a block diagram showing a configuration of a management server according to the embodiment of the present invention;
Fig. 10 is a table showing an example of vehicle registration information registered in the automatic traveling system according to the embodiment of the present invention;
Fig. 11 is a table showing an example of terminal setting information registered in the automatic traveling system according to the embodiment of the present invention;
Fig. 12 is a table showing an example of authorized person setting information registered in the automatic traveling system according to the embodiment of the present invention; and
Fig. 13 is a flowchart showing an example of a procedure of operation control processing executed by the automatic traveling system according to the embodiment of the present invention.

### DESCRIPTION OF EMBODIMENTS

The following embodiment is an embodied example of the present invention, and does not limit the technical scope of the present invention.

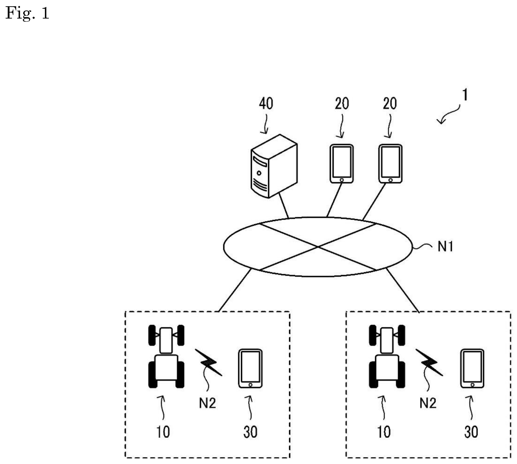

As shown in Fig. 1, an automatic traveling system 1 according to an embodiment of the present invention includes a work vehicle 10, a long-distance operation terminal 20, a short-distance operation terminal 30, and a management server 40. The number of the work vehicles 10 may be one or more. In addition, each of the number of the long-distance operation terminals 20 and the number of the short-distance operation terminals 30 may be one or more. The long-distance operation terminal 20 and the short-distance operation terminal 30 are examples of operation terminals of the present invention. In the present embodiment, a case will be described as an example in which the automatic traveling system 1 includes a plurality of work vehicles 10 (in Fig. 1, two work vehicles 10 are shown). Note that, in the present invention, the number of the work vehicles 10 may be one. Further, one short-distance operation terminal 30 is disposed for each work vehicle 10. The automatic traveling system 1 is a system capable of controlling an operation of the work vehicle 10 by using the long-distance operation terminal 20 and the short-distance operation terminal 30. The management server 40 controls the work vehicle 10, the long-distance operation terminal 20, and the short-distance operation terminal 30.

The work vehicle 10, the long-distance operation terminal 20, the short-distance operation terminal 30, and the management server 40 can communicate with each other via a communication network N1. For example, the work vehicle 10 and the long-distance operation terminal 20 can communicate via a mobile telephone network, a packet network, or a wireless LAN. The work vehicle 10 and the short-distance operation terminal 30 can communicate via a communication network N2. For example, the work vehicle 10 and the short-distance operation terminal 30 can communicate via short-distance wireless communication such as Bluetooth (registered trademark), wireless LAN, or infrared communication.

In the present embodiment, a case where the work vehicle 10 is a tractor will be described as an example. Note that, as another embodiment, the work vehicle 10 may be a combine, a rice transplanter, a sprayer, or the like. That is, the work vehicle of the present invention is a work vehicle that performs agricultural work. The work vehicles 10 may be vehicles of different types, or may be vehicles of the same type. The work vehicle 10 has a configuration capable of automatically traveling (autonomously traveling) in a work region of a field in accordance with a preset target route. In addition, the work vehicle 10 can perform predetermined work while automatically traveling in the work region. Moreover, the work vehicle 10 has a configuration capable of automatically traveling a road (connection path) connecting a plurality of fields in accordance with a preset inter-field route.

The work vehicle 10 can automatically travel in accordance with a target route and an inter-field route set in advance inside the field and outside the field (road), on the basis of position information on a current position of the work vehicle 10 calculated by a positioning unit 17. Note that the work vehicle 10 may perform automatic traveling in a state where a worker is on board.

For example, when a target route including a work route, and a travel start position and a travel end position are set in a field, the work vehicle 10 performs predetermined work while automatically traveling along the target route from the travel start position to the travel end position in the field.

In addition, upon completing the work in one field, the work vehicle 10 can move to another field to perform the work. For example, when the work in a first field is finished, the work vehicle 10 automatically travels along an inter-field route preset on the road and moves to a second field. Upon arriving at the second field, the work vehicle 10 performs predetermined work while automatically traveling along a preset target route in the second field.

The target route in the field is appropriately set according to a work content. In addition, the inter-field route of the road is set in advance according to an operation (teaching operation) performed by an operator. The inter-field route may be a road dedicated to a work vehicle or may be a road through which a general vehicle (such as a passenger car) can pass, such as an agricultural road, a forest road, a public road, a private road, or an automobile road.

The long-distance operation terminal 20 and the short-distance operation terminal 30 are operation terminals operable by an operator, and are, for example, a smartphone, a tablet terminal, or the like. The long-distance operation terminal 20 and the short-distance operation terminal 30 may be devices having the same function or may be devices having different functions. For example, the long-distance operation terminal 20 may be a smartphone, and the short-distance operation terminal 30 may be a remote controller.

The short-distance operation terminal 30 is operated by an operator (worker or the like) in a range within a predetermined distance from the work vehicle 10 in the field. For example, the worker can operate the short-distance operation terminal 30 to start automatic traveling of the work vehicle 10, cause a work machine 14 to ascend and descend, or stop the work vehicle 10 during automatic traveling. When communication with the work vehicle 10 is interrupted due to movement of the short-distance operation terminal 30 to an outside of a predetermined range or the like, an operation instruction for the work vehicle 10 made by the short-distance operation terminal 30 is restricted (prohibited).

The long-distance operation terminal 20 is operated by an operator (observer or the like) outside the field (for example, in a remote place). For example, the observer can operate the long-distance operation terminal 20 to start automatic traveling of the work vehicle 10, display a state of automatic traveling of the work vehicle 10, display an image obtained by a camera 53 mounted on the work vehicle 10, or stop the work vehicle 10 during automatic traveling. When communication between the long-distance operation terminal 20 and the work vehicle 10 is disconnected due to deterioration of a network environment or the like, an operation instruction for the work vehicle 10 made by the long-distance operation terminal 20 is restricted (prohibited).

As described above, the short-distance operation terminal 30 is mainly used by the worker to give an operation instruction while visually checking the work vehicle 10 in the vicinity of the work vehicle 10, and the long-distance operation terminal 20 is mainly used by the observer at a place distant from the work vehicle 10 to give an operation instruction while checking (monitoring) the work vehicle 10 by using a camera image.

### [Work vehicle 10]

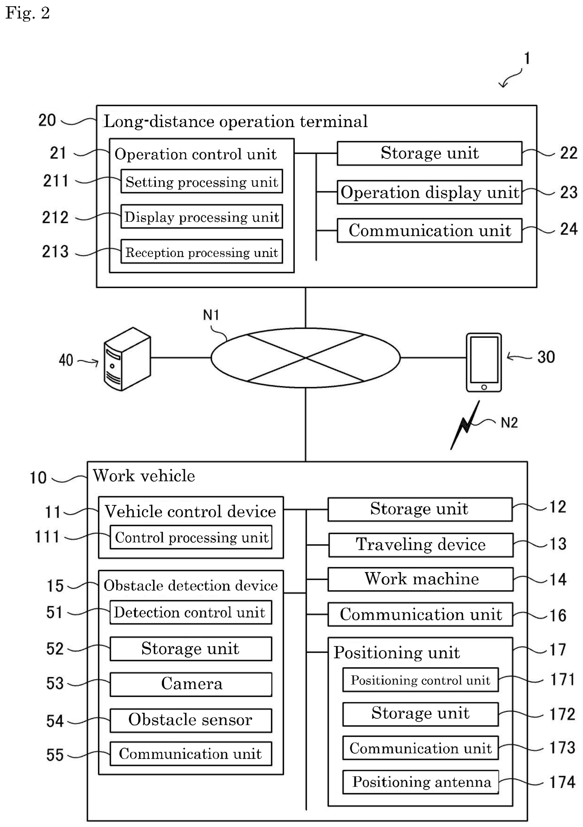

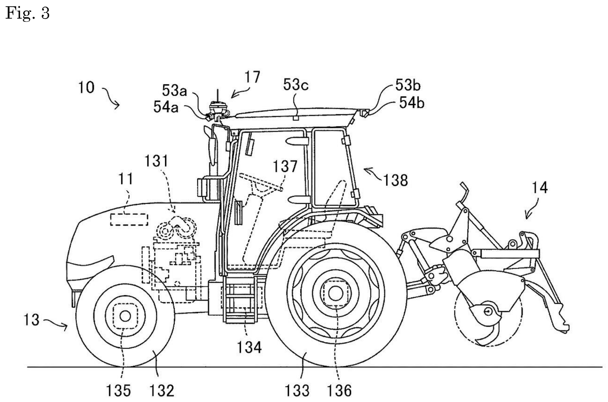

As shown in Figs. 2 and 3, the work vehicle 10 includes a vehicle control device 11, a storage unit 12, a traveling device 13, the work machine 14, an obstacle detection device 15, a communication unit 16, the positioning unit 17, and the like. The vehicle control device 11 is electrically connected to the storage unit 12, the traveling device 13, the work machine 14, the obstacle detection device 15, the positioning unit 17, and the like. Note that the vehicle control device 11 and the obstacle detection device 15 may be capable of wireless communication, and the vehicle control device 11 and the positioning unit 17 may be capable of wireless communication.

The communication unit 16 is a communication interface for connecting the work vehicle 10 to the communication networks N1 and N2 in a wired or wireless manner and executing data communication according to a predetermined communication protocol, with an external device (the long-distance operation terminal 20, the short-distance operation terminal 30, and the like) via the communication networks N1 and N2.

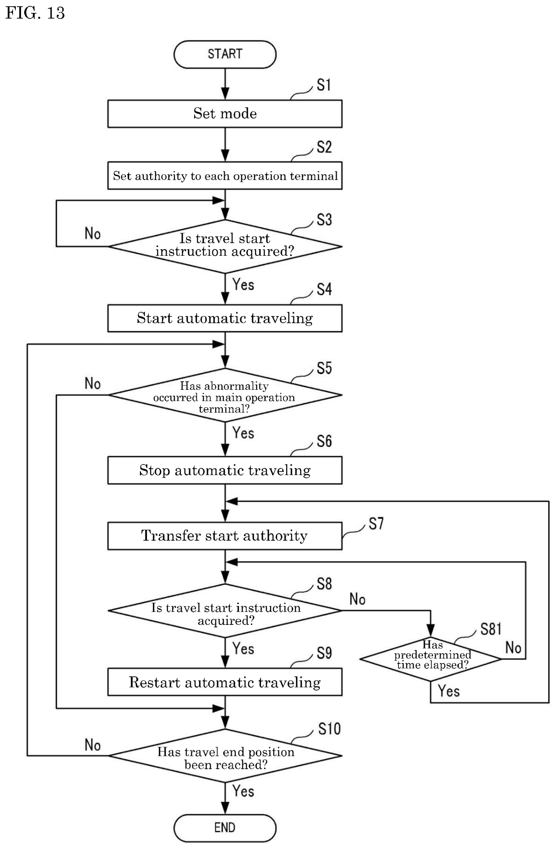

The storage unit 12 is a non-volatile storage unit such as a hard disk drive (HDD), a solid state drive (SSD), or a flash memory that stores various types of information. The storage unit 12 stores a control program such as an operation control program for causing the vehicle control device 11 to execute operation control processing (see Fig. 13) to be described later. For example, the operation control program is non-temporarily recorded in a computer-readable recording medium such as a CD or a DVD, and is read by a predetermined reading device (not shown) and stored in the storage unit 12. Note that the operation control program may be downloaded from a server (not shown) to the work vehicle 10 via the communication network N1 and stored in the storage unit 12. Further, the storage unit 12 also stores target route data and the like.

The traveling device 13 is a driving unit that causes the work vehicle 10 to travel. As shown in Fig. 3, the traveling device 13 includes an engine 131, front wheels 132, rear wheels 133, a transmission 134, a front axle 135, a rear axle 136, a steering wheel 137, and the like. Note that the front wheels 132 and the rear wheels 133 are provided individually on the left and right of the work vehicle 10. Further, the traveling device 13 is not limited to a wheel type including the front wheels 132 and the rear wheels 133, and may be a crawler type including crawlers provided on the left and right of the work vehicle 10.

The engine 131 is a driving source such as a diesel engine or a gasoline engine driven using fuel supplied to a fuel tank (not shown). The traveling device 13 may include an electric motor as a drive source together with the engine 131 or instead of the engine 131. Note that a generator (not shown) is connected to the engine 131, and electric power is supplied from the generator to electric components such as the vehicle control device 11, the obstacle detection device 15, and the positioning unit 17 provided in the work vehicle 10, a battery, and the like. Note that, the battery is charged with electric power supplied from the generator. Then, electric components such as the vehicle control device 11, the obstacle detection device 15, and the positioning unit 17 provided in the work vehicle 10 can be driven by electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. Further, a driving force of the engine 131 is also transmitted to the work machine 14 via a PTO shaft (not shown). When the work vehicle 10 performs automatic traveling, the traveling device 13 performs a traveling operation in accordance with a command from the vehicle control device 11. In addition, the traveling device 13 decelerates or stops the work vehicle 10 in accordance with a command from the vehicle control device 11.

The work machine 14 is, for example, a tiller, a mower, a plow, a fertilizing machine, a sprayer (chemical sprayer), a puddling device, or a seeding machine, and is detachable from the work vehicle 10. Thus, the work vehicle 10 can perform various types of work by using each of the work machines 14. Fig. 3 shows a case where the work machine 14 is a tiller.

The steering wheel 137 is an operation unit operated by the worker or the vehicle control device 11. For example, in the traveling device 13, an angle of the front wheels 132 is changed by a hydraulic power steering mechanism (not shown) or the like in accordance with an operation of the steering wheel 137 by the vehicle control device 11, and a traveling direction of the work vehicle 10 is changed.

In addition to the steering wheel 137, the traveling device 13 includes a shift lever, an accelerator, a brake, and the like (not shown) operated by the vehicle control device 11. Then, in the traveling device 13, a gear of the transmission 134 is switched to a forward gear, a back gear, or the like in accordance with an operation of the shift lever by the vehicle control device 11, and a traveling mode of the work vehicle 10 is switched to forward or backward. Further, the vehicle control device 11 operates the accelerator to control a rotation speed of the engine 131. Further, the vehicle control device 11 operates the brake to brake rotation of the front wheels 132 and the rear wheels 133 by using an electromagnetic brake.

The positioning unit 17 is a communication device including a positioning control unit 171, a storage unit 172, a communication unit 173, a positioning antenna 174, and the like. For example, as shown in Fig. 2, the positioning unit 17 is provided in an upper portion of a cabin 138 on which the worker boards. Further, the positioning unit 17 is not necessarily installed in the cabin 138. Moreover, the positioning control unit 171, the storage unit 172, the communication unit 173, and the positioning antenna 174 of the positioning unit 17 may be dispersedly disposed at different positions in the work vehicle 10. Note that, as described above, the battery is connected to the positioning unit 17, and the positioning unit 17 can operate even while the engine 131 is stopped. Furthermore, as the positioning unit 17, for example, a mobile phone terminal, a smartphone, a tablet terminal, a quantum compass, or the like may be substituted.

The positioning control unit 171 is a computer system including one or a plurality of processors and a storage memory such as a non-volatile memory and a RAM. The storage unit 172 is a non-volatile memory or the like that stores data such as a program for causing the positioning control unit 171 to execute positioning processing, positioning information, and movement information. For example, the program is non-temporarily recorded in a computer-readable recording medium such as a CD or a DVD, and is read by a predetermined reading device (not shown) and stored in the storage unit 172. Note that the program may be downloaded from a server (not shown) to the positioning unit 17 via the communication network N1 and stored in the storage unit 172.

The communication unit 173 is a communication interface for connecting the positioning unit 17 to the communication network N1 in a wired or wireless manner and executing data communication according to a predetermined communication protocol, with an external device such as a base station server via the communication network N1.

The positioning antenna 174 is an antenna that receives a radio wave (GNSS signal) transmitted from a satellite.

The positioning control unit 171 calculates a current position of the work vehicle 10 on the basis of the GNSS signal received by the positioning antenna 174 from the satellite. For example, in a case where the work vehicle 10 automatically travels in a field, when the positioning antenna 174 receives radio waves (transmission time, track information, or the like) transmitted from each of a plurality of satellites, the positioning control unit 171 calculates a distance between the positioning antenna 174 and each satellite, and calculates the current position (latitude and longitude) of the work vehicle 10 on the basis of the calculated distance. In addition, the positioning control unit 171 may perform positioning by a real-time kinematic method (RTK-GNSS positioning method (RTK method)) in which the current position of the work vehicle 10 is calculated using correction information corresponding to a base station (reference station) close to the work vehicle 10. In this manner, the work vehicle 10 performs automatic traveling using the positioning information obtained by the RTK method. Note that the current position of the work vehicle 10 may be the same position as a positioning position (for example, a position of the positioning antenna 174) or may be a position shifted from the positioning position. Note that the positioning control unit 171 may calculate (position) the current position of the work vehicle 10 by using a quantum compass.

When the work vehicle 10 detects a detection target during automatic traveling, the obstacle detection device 15 outputs detection information (measurement information) to the vehicle control device 11. Specifically, the obstacle detection device 15 includes a detection control unit 51, a storage unit 42, the camera 53, an obstacle sensor 54, a communication unit 55, and the like. The obstacle detection device 15 may be configured by one unit and mounted on the work vehicle 10, or a plurality of components may be dispersedly disposed on the work vehicle 10.

The communication unit 55 is a communication interface for connecting the obstacle detection device 15 to the communication networks N1 and N2 in a wired or wireless manner and executing data communication according to a predetermined communication protocol, with an external device (the long-distance operation terminal 20, the short-distance operation terminal 30, and the like) via the communication networks N1 and N2.

The storage unit 42 is a non-volatile storage unit such as an HDD, an SSD, or a flash memory that stores various types of information. The storage unit 42 stores a control program for causing the obstacle detection device 15 to execute predetermined processing. For example, the control program is non-temporarily recorded in a computer-readable recording medium such as a CD or a DVD, and is read by a predetermined reading device (not shown) and stored in the storage unit 42. Note that the control program may be downloaded from a server (not shown) to the obstacle detection device 15 via the communication network N1 and stored in the storage unit 42.

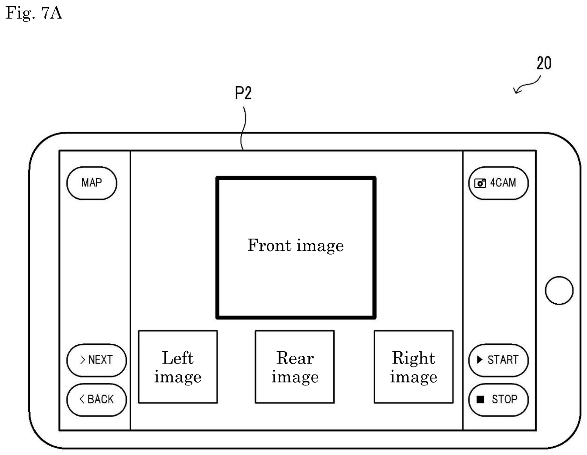

The camera 53 is a digital camera that captures an image of a subject included in a predetermined imaging range and outputs the captured image as digital image data. The camera 53 continuously images the subject at a predetermined frame rate, generates a frame image (captured image) having a predetermined resolution, and sequentially transmits the frame image to the detection control unit 51. In addition, the camera 53 transmits image data of the captured image to the long-distance operation terminal 20 via the communication unit 55. The long-distance operation terminal 20 can display the captured image on an operation screen of an operation display unit 23 (see Fig. 7A and the like).

The camera 53 includes: a front camera 53a capable of capturing an image of an imaging range in front of the work vehicle 10; a rear camera 53b capable of capturing an image of a rear imaging range as viewed from the work vehicle 10; a left-side camera 53c capable of capturing an image of an imaging range on a left side as viewed from the work vehicle 10; and a right-side camera (not shown) capable of capturing an image of an imaging range on a right side as viewed from the work vehicle 10. As shown in Fig. 3, the front camera 53a is disposed on an upper front side of the cabin 138, the rear camera 53b is disposed on an upper rear side of the cabin 138, the left-side camera 53c is disposed on an upper left side of the cabin 138, and the right-side camera is disposed on an upper right side of the cabin 138. Note that the camera 53 may include the front camera 53a and the rear camera 53b alone. Furthermore, the camera 53 may be an omnidirectional camera including one camera and capable of capturing images in all directions around the work vehicle 10.

The obstacle sensor 54 is a sensor that detects a detection target in a predetermined detection range by using infrared rays, ultrasonic waves, or the like. For example, the obstacle sensor 54 may be a lidar sensor (distance sensor) capable of measuring a distance to a detection target in three dimensions by using a laser, or may be a sonar sensor including a plurality of sonars capable of measuring a distance to a detection target by using an ultrasonic wave. The obstacle sensor 54 is installed at a center front portion, a center rear portion, or the like of a machine body of the work vehicle 10, and monitors the surroundings of the work vehicle 10 to detect an obstacle. In the present embodiment, a case will be described as an example in which the obstacle sensor 54 includes a front obstacle sensor 54a capable of detecting a detection target in detection ranges of the front and sides (left and right) as viewed from the work vehicle 10, and a rear obstacle sensor 54b capable of detecting a detection target in detection ranges of the rear and sides (left and right) as viewed from the work vehicle 10. As shown in Fig. 3, the front obstacle sensor 54a is disposed on an upper front side of the cabin 138, and the rear obstacle sensor 54b is disposed on an upper rear side of the cabin 138. A detection target in a detection range of 360 degrees around the work vehicle 10 can be detected by the front obstacle sensor 54a and the rear obstacle sensor 54b. The front camera 53a and the front obstacle sensor 54a may be configured by one unit, and the rear camera 53b and the rear obstacle sensor 54b may be configured by one unit. Note that the obstacle sensor 54 may include: a left obstacle sensor capable of detecting a detection target in a detection range on a left side as viewed from the work vehicle 10; and a right obstacle sensor capable of detecting a detection target in a detection range on a right side as viewed from the work vehicle 10.

The obstacle sensor 54 measures a distance to each distance measurement point (measurement target) present in the measurement range by using, for example, a laser (near-infrared laser light or the like), and generates a distance image on the basis of the measurement information. The obstacle sensor 54 includes an electronic control unit in which a microcontroller and the like are integrated, a processing unit constructed by various control programs, and the like, and is connected to the detection control unit 51, the vehicle control device 11, and the like via a CAN so as to be able to communicate with each other.

The obstacle sensor 54 measures a distance from the obstacle sensor 54 to a distance measurement point in a measurement range by a time of flight (TOF) method of measuring the distance to the distance measurement point on the basis of a round-trip time until the emitted laser reaches the distance measurement point and returns. The obstacle sensor 54 performs three-dimensional measurement in the measurement range by scanning laser vertically and horizontally at a high speed over the entire measurement range, and sequentially measuring the distance to the distance measurement point for each scanning angle (coordinates). The obstacle sensor 54 sequentially measures intensity (reflection intensity) of the reflected light from each distance measurement point obtained by vertically and horizontally scanning the laser at a high speed over the entire measurement range. The obstacle sensor 54 repeatedly measures a distance to each distance measurement point of the measurement range, each reflection intensity, and the like in real time.

The obstacle sensor 54 generates a distance image and extracts a distance measurement point group estimated as an obstacle from measurement information such as a measured distance to each distance measurement point and a scanning angle (coordinates) with respect to each distance measurement point, and transmits the extracted measurement information regarding the distance measurement point group to the detection control unit 51 as the measurement information regarding the obstacle.

Further, a control range corresponding to a distance from the work vehicle 10 is set as a measurement range (detection range) of the obstacle sensor 54. For example, in the measurement range, a range in which a distance from the work vehicle 10 is L1 is set as a stop control range, a range from the distance L1 to a distance L2 is set as a deceleration control range, and a range from the distance L2 to a distance L3 is set as a notification control range (where L1 < L2 < L3). Note that, each control range can be set according to a type, a model, a work content, a vehicle speed, and the like of the work vehicle 10. Further, the control range may be switchable depending on a traveling direction of the work vehicle 10. For example, the detection control unit 51 sets the control range to a front side of the machine body when the work vehicle 10 is traveling forward, and sets the control range to a rear side of the machine body when the work vehicle 10 is traveling backward.

The detection control unit 51 outputs the measurement information acquired from the obstacle sensor 54 to the vehicle control device 11. The detection control unit 51 sequentially outputs the measurement information to the vehicle control device 11 every time the measurement information is acquired from the obstacle sensor 54 while the work vehicle 10 automatically travels. As another embodiment, the detection control unit 51 may determine a type (a person, a vehicle, a structure, a material, or the like) of a detection target (measurement target) on the basis of the captured image acquired from the camera 53 and the measurement information acquired from the obstacle sensor 54, and output the determination result to the vehicle control device 11.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the work vehicle 10 by executing, with the CPU, various control programs stored in advance in the ROM or the storage unit 12.

Specifically, as shown in Fig. 2, the vehicle control device 11 includes processing units such as a control processing unit 111. Note that, the vehicle control device 11 functions as the various processing units by executing various types of processing according to the operation control program with the CPU. In addition, some or all of the processing units may include an electronic circuit. Note that the operation control program may be a program for causing a plurality of processors to function as the processing unit.

The control processing unit 111 controls an operation of the work vehicle 10. For example, when a travel mode of the work vehicle 10 is automatic traveling (automatic traveling mode), the control processing unit 111 causes the work vehicle 10 to automatically travel on the basis of position information (positioning information) indicating a current position of the work vehicle 10 measured by the positioning unit 17. For example, when the work vehicle 10 satisfies a start condition for automatic traveling and acquires a travel start instruction from the operator (operation terminal), the control processing unit 111 starts automatic traveling of the work vehicle 10 on the basis of the positioning information. For example, the control processing unit 111 causes the work vehicle 10 to automatically travel from a travel start position to a travel end position in accordance with a target route generated and set in advance.

In addition, when the control processing unit 111 acquires a stop instruction from the operator during automatic traveling of the work vehicle 10, the control processing unit 111 stops automatic traveling of the work vehicle 10.

Note that, when the travel mode of the work vehicle 10 is manual traveling (manual traveling mode), the work vehicle 10 can be caused to manually travel on the basis of an operation (manual steering) of an occupant (worker). For example, the control processing unit 111 acquires operation information corresponding to a driving operation such as a steering wheel operation, a shift operation, a traveling direction switching operation, and a brake operation performed by the worker, and causes the traveling device 13 to execute a traveling operation on the basis of the operation information.

Further, when the work vehicle 10 detects an obstacle during automatic traveling, the control processing unit 111 causes the work vehicle 10 to execute a predetermined countermeasure processing. Specifically, when an obstacle is detected in the notification control range, the control processing unit 111 causes the work vehicle 10 to generate a warning sound. Further, when an obstacle is detected in the deceleration control range, the control processing unit 111 decelerates the work vehicle 10 during automatic traveling from a preset vehicle speed. Further, when an obstacle is detected in the stop control range, the control processing unit 111 temporarily stops (stops) the work vehicle 10 during automatic traveling. Note that, the control processing unit 111 may cause the work vehicle 10 to execute countermeasure processing according to the type of the detection target detected by the obstacle detection device 15.

In addition, the control processing unit 111 changes a vehicle speed of the work vehicle 10 during automatic traveling. For example, the control processing unit 111 increases the vehicle speed in accordance with an accelerating operation performed by the operator at an operation terminal (the long-distance operation terminal 20, the short-distance operation terminal 30), and decreases the vehicle speed in accordance with a decelerating operation performed by the operator. In addition, the control processing unit 111 changes an engine speed of the work vehicle 10 during automatic traveling, in accordance with an operation performed by the operator at the operation terminal. Further, the control processing unit 111 causes the work machine 14 to ascend and descend according to an operation performed by the operator at the operation terminal.

In this manner, the control processing unit 111 controls the operation of the work vehicle 10 in accordance with the operation performed by the operator at the operation terminal (the long-distance operation terminal 20, the short-distance operation terminal 30) and a manual operation performed by an occupant of the vehicle. The control processing unit 111 is an example of an operation processing unit of the present invention.

Here, the work vehicle 10 has a short-distance mode in which the operation of the work vehicle 10 can be controlled within a predetermined range and a long-distance mode in which the operation of the work vehicle 10 can be controlled via the communication network N1 (the Internet or the like) (can be operated via cloud connection), and the control processing unit 111 can set and switch between the short-distance mode and the long-distance mode. Note that the short-distance mode may be a mode in which the operation of the work vehicle 10 can be controlled through short-distance communication, and the long-distance mode may be a mode in which the operation of the work vehicle 10 can be controlled through long-distance communication. In addition, the short-distance mode may be a remote control mode, and the long-distance mode may be a smartphone mode. In addition, the control processing unit 111 can control the operation of the work vehicle 10 in accordance with the set mode. The control processing unit 111 sets the short-distance mode and the long-distance mode in accordance with an operation (mode setting/switching operation) performed by the operator on an operation terminal (the present terminal) mounted on the work vehicle 10, for example.

### [Long-distance operation terminal 20]

As shown in Fig. 2, the long-distance operation terminal 20 is an information processing apparatus including an operation control unit 21, a storage unit 22, the operation display unit 23, a communication unit 24, and the like. For example, the long-distance operation terminal 20 is configured by a portable terminal such as a smartphone or a tablet terminal. Note that the long-distance operation terminal 20 may be a stationary (desktop) personal computer.

The communication unit 24 is a communication interface for connecting the long-distance operation terminal 20 to the communication network N1 in a wired or wireless manner and executing data communication according to a predetermined communication protocol, with an external device such as one or a plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives an operation. The display unit displays a map of a predetermined area including a work target field, predetermined information regarding the work vehicle 10, and the like. The predetermined information includes at least one of information regarding a current surrounding environment of the work vehicle 10, information regarding a current traveling status of the work vehicle 10, and information regarding a current work status of the work vehicle 10. On the basis of the predetermined information displayed on the long-distance operation terminal 20, the operator (observer) can grasp a travel state of the work vehicle 10 that automatically travels in a field, a road, or the like, a detection result of an obstacle, and the like, at a place distant from the work vehicle 10. That is, the observer can remotely monitor the work vehicle 10 by using the long-distance operation terminal 20.

In addition, the display unit displays an operation screen for giving a travel start instruction, a travel stop instruction, a travel restart instruction, and the like to the work vehicle 10. In addition, a registration screen for registering work vehicle information, field information, work information, and the like is displayed on the display unit.

The storage unit 22 is a non-volatile storage unit such as an HDD, an SSD, or a flash memory that stores various types of information. The storage unit 22 stores a control program such as a control program for causing the operation control unit 21 to execute various types of processing. For example, the control program is non-temporarily recorded in a computer-readable recording medium such as a CD or a DVD, and is read by a predetermined reading device (not shown) and stored in the storage unit 22. Note that the control program may be downloaded from a server (not shown) to the long-distance operation terminal 20 via the communication network N1 and stored in the storage unit 22.

In addition, the storage unit 22 stores data such as work vehicle information which is information regarding the work vehicle 10 and target route information which is information regarding a target route. The work vehicle information includes information such as a vehicle number and a type for each work vehicle 10. The vehicle number is identification information on the work vehicle 10. The type is a type of the work vehicle 10. Note that, the storage unit 22 may store the work vehicle information regarding one work vehicle 10, or may store the work vehicle information regarding a plurality of work vehicles 10. In the present embodiment, the work vehicle information on each of the two work vehicles 10 as monitoring targets of the long-distance operation terminal 20 is stored in the storage unit 22.

The target route information includes, for each target route, information such as a route name, a field name, an address, a field area, and a work time. The route name is a route name of a target route. The field name is a name of a work target field to which the target route is set. The address is an address of the field, and the field area is an area of the field. The work time is a time required for the work of the field by the work vehicle 10.

In a case where the target route is a route corresponding to a road (inter-field route), the target route information includes information such as a route name, an address, a travel distance, and a travel time. The route name is a name of a road, and the address is an address of the road. The travel distance is a distance by which the work vehicle 10 travels on the road, and is, for example, a distance from a first field to a second field. The travel time is a time during which the work vehicle 10 travels on the road, and is, for example, a time required for movement from the first field to the second field.

Note that the storage unit 22 may store the target route information regarding one target route, or may store the target route information regarding a plurality of target routes. For example, when the operator generates a plurality of target routes for one or a plurality of fields managed by the operator, the target route information regarding each target route is stored in the storage unit 22. Note that, for one field, one target route may be set, or a plurality of target routes may be set. In addition, for one set of fields, one inter-field route may be set or a plurality of inter-field routes may be set. In the present embodiment, the storage unit 22 stores target route information corresponding to a target route on which a work vehicle 10a travels in the first field and target route information corresponding to a target route on which a work vehicle 10b travels in the second field.

As another embodiment, some or all of information such as the work vehicle information and the target route information may be stored in a server (management server 40) accessible from the long-distance operation terminal 20. The operator may perform an operation of registering the work vehicle information and the target route information in the management server 40. In this case, the operation control unit 21 may acquire the information from the management server 40 and execute each process.

The operation control unit 21 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work region) for various types of processing executed by the CPU. Then, the operation control unit 21 controls the long-distance operation terminal 20 by executing, with the CPU, various control programs stored in advance in the ROM or the storage unit 22.

As shown in Fig. 2, the operation control unit 21 includes various processing units such as a setting processing unit 211, a display processing unit 212, and a reception processing unit 213. Note that the operation control unit 21 functions as the various processing units by executing, with the CPU, various types of processing according to a control program. In addition, some or all of the processing units may include an electronic circuit. Note that the control program may be a program for causing a plurality of processors to function as the processing unit.

The setting processing unit 211 sets information regarding the work vehicle 10 (hereinafter, referred to as work vehicle information), information regarding the field (hereinafter, referred to as field information), and information regarding how to specifically perform work (hereinafter referred to as work information).

Specifically, when the operator performs a registration operation on the long-distance operation terminal 20, the setting processing unit 211 sets information such as a model of the work vehicle 10, a position where the positioning antenna 174 is attached in the work vehicle 10, a type of the work machine 14, a size and a shape of the work machine 14, a position of the work machine 14 with respect to the work vehicle 10, a vehicle speed and an engine speed during work of the work vehicle 10, and a vehicle speed and an engine speed during turning of the work vehicle 10.

In addition, when a registration operation is performed on the long-distance operation terminal 20, the setting processing unit 211 sets information such as a location and a shape of the field, a work start position (travel start position) at which work is started, a work end position (travel end position) at which work is ended, and a work direction.

The information on the location and the shape of the field can be automatically acquired, for example, when the operator boards on the work vehicle 10 and drives the work vehicle 10 so as to make one round along an outer periphery of the field, and records a transition of position information on the positioning antenna 174 at that time. In addition, the location and the shape of the field can also be acquired on the basis of a polygon obtained by the worker operating the long-distance operation terminal 20 and designating a plurality of points on a map in a state where the map is displayed on the long-distance operation terminal 20.

In addition, the setting processing unit 211 is configured to be able to set, as the work information, the presence or absence of cooperative work between the work vehicle 10 (unmanned tractor) and a manned work vehicle 10, the number of skips which is the number of work routes to be skipped when the work vehicle 10 turns in a headland, a width of the headland, a width of a non-cultivated land, and the like.

In addition, the setting processing unit 211 generates a target route on which the work vehicle 10 automatically travels in the field, on the basis of the setting information. Specifically, the setting processing unit 211 generates a target route in the field on the basis of the travel start position and the travel end position registered in the field setting. For example, the setting processing unit 211 generates a target route including a travel start position, a travel end position, a straight route, and a turning route, on the basis of a setting operation performed by the operator. The setting processing unit 211 registers the generated target route in association with the field. In addition, the setting processing unit 211 outputs route data of the target route to the work vehicle 10.

As another embodiment, the setting processing unit 211 may be included in another device such as the management server 40, and another device may set the each piece of information.

The display processing unit 212 displays various types of information on the operation display unit 23. Specifically, the display processing unit 212 displays the work vehicle 10 registered in advance, on a map screen P1 selectable by the operator. For example, in a case where the observer registers the work vehicle 10 as a monitoring target (management target), the display processing unit 212 displays the work vehicle 10 on the map screen P1 to be selectable. The work vehicle 10 displayed on the map screen P1 may be the work vehicle 10 whose information is registered in the long-distance operation terminal 20, or may be the work vehicle 10 selected by the observer to start work from now among the registered plurality of work vehicles 10. Further, the work vehicle 10 displayed on the map screen P1 may be all the work vehicles 10 registered in the management server 40. In this case, the display processing unit 212 may display the work vehicle 10 as a monitoring target of the own terminal (long-distance operation terminal 20) to be identifiable.

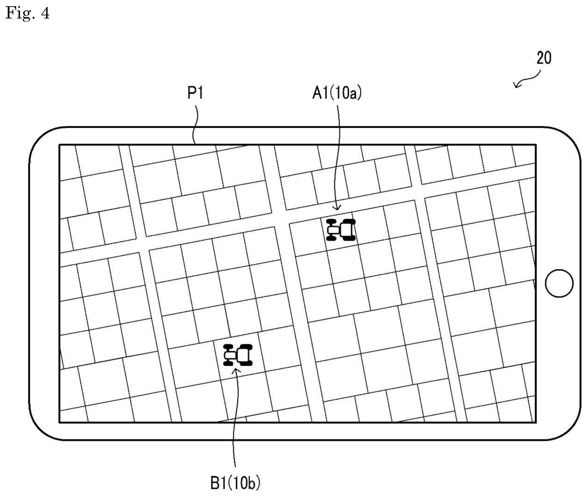

Fig. 4 shows an example of the map screen P1. As shown in Fig. 4, on the map screen P1, the display processing unit 212 displays a map of a predetermined area including respective current positions of the two work vehicles (work vehicles 10a and 10b) registered in advance. In addition, on the map, the display processing unit 212 displays identification information on the work vehicle 10 at a position corresponding to the current position of the work vehicle 10. Specifically, as shown in Fig. 4, on the map, the display processing unit 212 displays an icon image A1 of the work vehicle 10a at a position corresponding to the current position of the work vehicle 10a and displays an icon image B1 of the work vehicle 10b at a position corresponding to the current position of the work vehicle 10b. The display processing unit 212 acquires position information (positioning information) from the work vehicle 10, and displays the icon image of the work vehicle 10 on the map. The display processing unit 212 updates the position of the icon image on the map in real time. As another embodiment, the display processing unit 212 may display a name (text information) of the work vehicle 10a on the map instead of the icon image.

In addition, the display processing unit 212 may display the icon image A1 of the work vehicle 10a and the icon image B1 of the work vehicle 10b to be distinguishable. For example, the display processing unit 212 may display the name of the work vehicle 10a near the icon image A1, and display the name of the work vehicle 10b near the icon image B1. In addition, the display processing unit 212 may display identification information (name or the like) of the work vehicle 10a when the observer performs a touch operation or a mouse over operation on the icon image A1, and display identification information (name or the like) of the work vehicle 10b when the observer performs a touch operation or a mouse over operation on the icon image B1.

In addition, the display processing unit 212 may enlarge or reduce the map to display on the map screen P1 in accordance with an operation of enlarging or reducing the map. Further, the display processing unit 212 may automatically adjust a display magnification in accordance with a position of the work vehicle 10 as a monitoring target. For example, the display processing unit 212 determines the display magnification of the map such that the icon images of all the work vehicles 10 as monitoring targets are contained in one screen (the same page).

According to the map screen P1 shown in Fig. 4, the observer can grasp the current positions of all the work vehicles 10 as monitoring targets. Note that the display processing unit 212 may be configured to display, on the map screen P1, the work vehicle 10 that is not working and is being stored in a storage place (such as a warehouse), or may be configured not to display, on the map screen P1, the work vehicle 10 that is not working and is being stored in the storage place. Further, the observer may set whether or not to display, on the map screen P1, the work vehicle 10 that is not working and is being stored in the storage place.

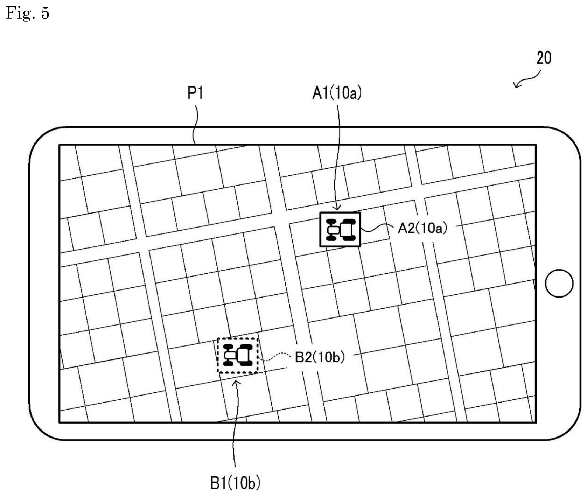

In addition, the display processing unit 212 displays the identification information on the map in a display mode according to a current state of the work vehicle 10. Specifically, the display processing unit 212 causes the icon image to be displayed on the map to allow identification as to whether the work vehicle 10 is in automatic traveling or is stopped. That is, the display processing unit 212 makes a difference on the map between a display mode of a case where the work vehicle 10 is in automatic traveling and a display mode of a case where the work vehicle 10 is stopped. In the example shown in Fig. 5, when the work vehicle 10a is stopped, the display processing unit 212 displays the icon image A1 in a mode indicating that the work vehicle 10a is stopped. Further, when the work vehicle 10b is in automatic traveling, the display processing unit 212 displays the icon image B1 in a mode indicating that the work vehicle 10b is in automatic traveling. Note that the display mode may be a line type, a color, a thickness, or the like of a frame image surrounding the icon image, or may be a color, a size, a display method (lighting, flashing), or the like of the icon image. For example, as shown in Fig. 5, the display processing unit 212 displays a frame image A2 of the icon image A1 and a frame image B2 of the icon image B1 in display modes different from each other.

As another embodiment, the display processing unit 212 may hide the frame image when the work vehicle 10 is in automatic traveling normally, and display the frame image when the work vehicle 10 stops automatic traveling.

In addition, the display processing unit 212 may display a message (text information) indicating that automatic traveling is stopped in the vicinity of the icon image A1, and display a message indicating that the vehicle is automatically traveling in the vicinity of the icon image B1. Further, the display processing unit 212 may display a message indicating that automatic traveling is stopped when the operator performs a touch operation or a mouse over operation on the icon image A1, and display a message indicating that the vehicle is in automatic traveling when the operator performs a touch operation or a mouse over operation on the icon image B1.

Note that, the work vehicle 10 stops automatic traveling, for example, when an obstacle is detected, when the work is ended, when a remaining amount of a spray material or fuel becomes less than a specified amount, when a yield of a harvested product becomes equal to or greater than a specified amount, when regeneration work of a diesel particulate filter (DPF) is required, when urea water supply work is required, and the like.

As another embodiment, the display processing unit 212 may display, on the map screen P1, identification information indicating that an obstacle has been detected when the obstacle has been detected. For example, when the work vehicle 10a detects an obstacle, the display processing unit 212 turns on or blinks the icon image A1 or displays the frame image A2 of the icon image A1 in a predetermined color. In addition, the display processing unit 212 may display the icon image A1 or the frame image A2 in a display mode according to a detection position (control range) when the work vehicle 10a detects an obstacle. For example, the display processing unit 212 displays the frame image A2 in green when the work vehicle 10a detects an obstacle in the notification control range, the display processing unit 212 displays the frame image A2 in yellow when the work vehicle 10a detects an obstacle in the deceleration control range, and the display processing unit 212 displays the frame image A2 in red when the work vehicle 10a detects an obstacle in the stop control range.

In addition, the display processing unit 212 may display identification information showing a work status on the map screen P1. For example, when the work vehicle 10a finishes work in the work target field, the display processing unit 212 turns on or blinks the icon image A1 or displays the frame image A2 of the icon image A1 in a predetermined color. Further, for example, in a case where the work vehicle 10a is a vehicle (sprayer) that sprays a spray material (chemical liquid, water, or the like), when a remaining amount of the spray material in the work vehicle 10a becomes less than a specified amount, or when a timing of replenishing the spray material arrives, the display processing unit 212 turns on or blinks the icon image A1 or displays the frame image A2 of the icon image A1 in a predetermined color. Further, for example, in a case where the work vehicle 10a is a vehicle (combine or the like) that harvests a harvested product, when a yield of the harvested product becomes equal to or greater than a specified amount or when a harvest discharge timing arrives, the display processing unit 212 turns on or blinks the icon image A1 or displays the frame image A2 of the icon image A1 in a predetermined color.

As described above, when the work vehicle 10 stops automatic traveling, the display processing unit 212 may display a stop state of the work vehicle 10 on the map screen P1 to be identifiable, and may display identification information that allows a cause of the stop of the work vehicle 10 to be specified, on the map screen P1 when the work vehicle 10 stops the automatic traveling.

According to the map screen P1 shown in Fig. 5, the observer can grasp a current state for each work vehicle 10 as a monitoring target.

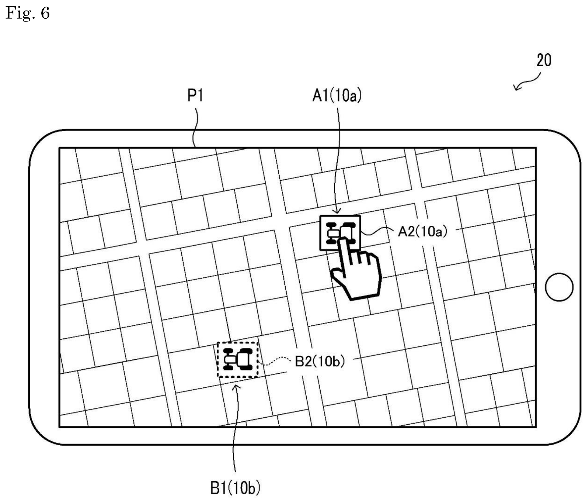

Here, the display processing unit 212 displays the work vehicle 10 to be selectable on the map screen P1 (see Figs. 4 and 5). Specifically, the display processing unit 212 displays the icon images A1 and B1 to be selectable on the map of the map screen P1. The reception processing unit 213 receives an icon image selection operation from the operator on the map screen P1. For example, as shown in Fig. 6, when the observer touches the icon image A1 of the work vehicle 10a displayed on the map screen P1 with a finger, the reception processing unit 213 receives the touch operation. For example, when the observer looks at the map screen P1 and grasps that the work vehicle 10a has stopped automatic traveling, the observer touches the icon image A1 of the work vehicle 10a to check the cause of the stop.

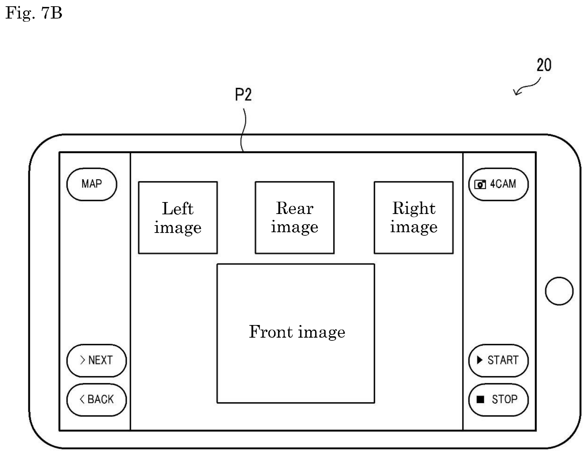

The display processing unit 212 causes the operation display unit 23 to display predetermined information regarding the work vehicle 10 selected by the observer. Specifically, the display processing unit 212 displays the predetermined information on an operation screen P2. The predetermined information includes at least one of information regarding a current surrounding environment of the work vehicle 10, information regarding a current traveling status of the work vehicle 10, and information regarding a current work status of the work vehicle 10. For example, when the observer selects the icon image A1 of the work vehicle 10a (see Fig. 6), the display processing unit 212 causes the operation screen P2 to display a captured image of surroundings of the work vehicle 10a captured by the camera 53 mounted on the work vehicle 10a as shown in Fig. 7A. Here, the display processing unit 212 acquires a front image, a rear image, a left image, and a right image of the work vehicle 10a from the camera 53, and displays the images on the operation screen P2. In addition, as shown in Fig. 7A, the display processing unit 212 displays the front image on an upper side of the operation screen P2, and displays the rear image, the left image, and the right image on a lower side of the operation screen P2. As another embodiment, as shown in Fig. 7B, the display processing unit 212 may display the front image on the lower side of the operation screen P2 and display the rear image, the left image, and the right image on the upper side of the operation screen P2. Further, an arrangement, a size, and display/non-display of each image may be settable (customized) by the operator.

In addition, when the work vehicle 10a detects an obstacle, the display processing unit 212 may display a captured image including the obstacle among a plurality of captured images obtained by the camera 53 to be identified on the operation screen P2. For example, when the obstacle sensor 54 of the work vehicle 10a detects an obstacle in front of the work vehicle 10a, the display processing unit 212 highlights the front image on the operation screen P2 as shown in Fig. 7A.

As described above, on the map of the map screen P1, the display processing unit 212 displays the icon image of each of a plurality of work vehicles 10 registered in advance in a display mode corresponding to a current state of the work vehicle 10 (see Fig. 6), and displays, on the operation screen P2, a captured image obtained by capturing an image of surroundings of the work vehicle 10 with the camera 53 mounted on the work vehicle 10 corresponding to the icon image selected by the observer among the plurality of icon images on the map screen P1 (see Fig. 7A).

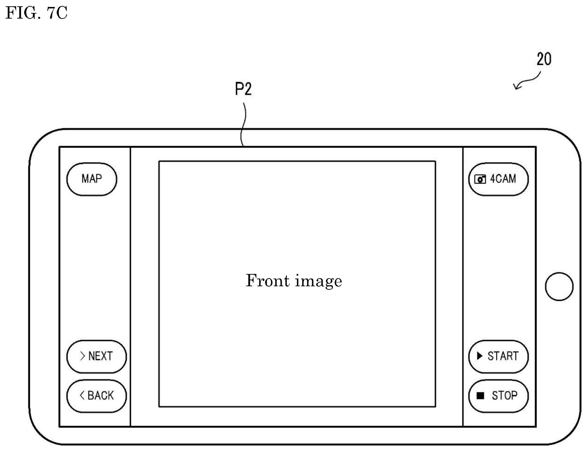

In addition, the display processing unit 212 displays a switch button (a "NEXT" button and a "BACK" button) for switching the display image on the operation screen P2. When the observer presses the "NEXT" button once, the display processing unit 212 enlarges and displays the front image (see Fig. 7C). The display processing unit 212 enlarges and displays the right image when the observer presses the "NEXT" button once next, the display processing unit 212 enlarges and displays the rear image when the observer presses the "NEXT" button once next, and the display processing unit 212 enlarges and displays the left image when the observer presses the "NEXT" button once next. Every time the observer presses the "NEXT" button, the display processing unit 212 switches the front image, the right image, the rear image, and the left image in this order. In addition, every time the observer presses the "BACK" button, the display processing unit 212 switches the front image, the left image, the rear image, and the right image in this order. Further, when the observer presses a "4CAM" button on the operation screen P2 shown in Fig. 7C, the display processing unit 212 displays captured images in the four directions (the front image, the rear image, the left image, and the right image) on the operation screen P2 (see Fig. 7A).

Note that the display processing unit 212 may be able to change (zoom) a display magnification (visual field size) of the captured image on the operation screen P2 shown in Figs. 7A to 7C. For example, on the operation screen P2 shown in Fig. 7C, the display processing unit 212 enlarges and displays (zooms in) the front image when the observer performs an enlargement operation (pinch-out), and the display processing unit 212 reduces and displays (zooms out) the front image when the observer performs a reduction operation (pinch-in). Furthermore, the display processing unit 212 may change an imaging range (imaging direction) of the camera 53 in accordance with an operation performed by the observer.

Furthermore, in the captured image, the display processing unit 212 may highlight the detected obstacle by causing a frame image to surround the detected obstacle, or may track the obstacle. In addition, the display processing unit 212 may display information on a distance to the detected obstacle and information on a type of the obstacle (a person, a vehicle, a structure, a material, or the like) on the operation screen P2. Note that the camera 53 may be disposed such that a part of the vehicle body of the work vehicle 10 appears so that a sense of distance to the detected obstacle can be easily grasped.

Further, the display processing unit 212 displays a "START" button and a "STOP" button on the operation screen P2. When the observer presses the "START" button, the reception processing unit 213 receives the operation, and outputs an instruction (travel start instruction) to start or restart automatic traveling to the work vehicle 10. For example, at a time of starting automatic traveling of the work vehicle 10a, when the observer selects the work vehicle 10a on the map screen P1 (see Fig. 6) and confirms safety around the work vehicle 10a on the operation screen P2, the observer presses the "START" button. As a result, the reception processing unit 213 outputs an instruction (travel start instruction) to cause the work vehicle 10a to start automatic traveling, and the work vehicle 10a starts automatic traveling in accordance with the instruction. Note that the operation control unit 21 may permit the operation of pressing the "START" button when the work vehicle 10 satisfies a start condition for automatic traveling. Further, for example, in a case where the work vehicle 10a detects an obstacle and stops automatic traveling, when the observer selects the work vehicle 10a on the map screen P1 (see Fig. 6) and confirms safety around the work vehicle 10a on the operation screen P2, the observer presses the "START" button. As a result, the reception processing unit 213 outputs an instruction (travel start instruction) to cause the work vehicle 10a to restart automatic traveling, and the work vehicle 10a restarts automatic traveling according to the instruction. As another embodiment, the reception processing unit 213 may permit the operation of pressing the "START" button on condition that an obstacle is no longer detected.

Further, for example, when the observer selects the work vehicle 10b on the map screen P1 and presses the "STOP" button on the operation screen P2 while the work vehicle 10b is in automatic traveling, the reception processing unit 213 outputs a stop instruction (travel stop instruction) to stop automatic traveling to the work vehicle 10b. As a result, the work vehicle 10b stops automatic traveling in accordance with the instruction.

Note that, when the observer presses the "MAP" button on the operation screen P2, the display processing unit 212 switches to the map screen P1 (see Fig. 5). In this manner, the observer can switch between the map screen P1 and the operation screen P2.

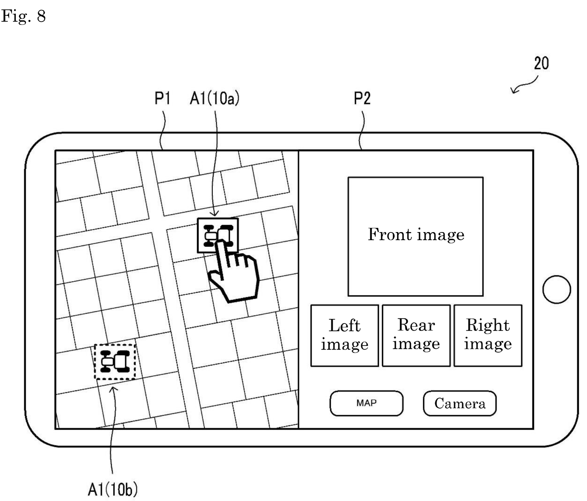

As another embodiment, the display processing unit 212 may display the map screen P1 and the operation screen P2 to be aligned in a left-right direction or an updown direction. For example, as shown in Fig. 8, the display processing unit 212 displays the map screen P1 in a display region on a left side of the operation display unit 23, and displays the operation screen P2 corresponding to the work vehicle 10a selected on the map screen P1 in a display region on a right side. Further, the display processing unit 212 enlarges and displays the map screen P1 (see Fig. 6) when the observer presses the "MAP" button on the operation screen P2 shown in Fig. 8, and enlarges and displays the operation screen P2 (see Fig. 7A) when the observer presses the "camera" button. Note that, the display processing unit 212 may display the front image on a lower side of the operation screen P2 and display the rear image, the left image, and the right image on an upper side of the operation screen P2. Further, an arrangement, a size, and display/non-display of each image may be settable (customized) by the observer.

The reception processing unit 213 can receive an operation instruction for controlling the operation of the work vehicle 10, in addition to a start instruction and a stop instruction for automatic traveling. For example, the reception processing unit 213 receives, from the observer, a setting operation and a changing operation for a vehicle speed, an engine speed, and the like of the work vehicle 10, an ascending and descending operation for the work machine 14, and an operation of approaching a ridge. For example, the display processing unit 212 causes the operation screen P2 (see Fig. 7A) to display an operation unit that receives the setting operation and the changing operation for the vehicle speed and the engine speed of the work vehicle 10, the ascending and descending operation for the work machine 14, and the operation of approaching a ridge. The observer can give an operation instruction to control the operation of the work vehicle 10 in a state where the observer can check a camera image. The operation control unit 21 outputs the operation instruction received by the reception processing unit 213 to the work vehicle 10.

Note that the setting processing in the setting processing unit 211 described above may be executed by the management server 40, the short-distance operation terminal 30, an operation terminal (not shown) on board on the work vehicle 10, or the like. Furthermore, the processing of starting automatic traveling in the operation control unit 21 can also be executed by the short-distance operation terminal 30 as described above. For example, the operator (worker) within a predetermined range of the field can operate the short-distance operation terminal 30 to give the start instruction and the like for automatic traveling.

Note that the long-distance operation terminal 20 may be able to access a website (agricultural support site) of an agricultural support service provided by a server (for example, the management server 40) via the communication network N1. In this case, the long-distance operation terminal 20 can function as an operation terminal of the server, by the operation control unit 21 executing a browser program. Then, the server includes the above-described individual processing units and executes the individual processes.

Here, the long-distance operation terminal 20 may be configured to be able to control the operation of the work vehicle 10 when the mode is set to the long-distance mode. That is, the automatic traveling system 1 sets an operation content for which the operation of the work vehicle 10 can be controlled by the long-distance operation terminal 20, depending on whether the set mode is the short-distance mode or the long-distance mode. Note that the operation control unit 21 may cause the map screen P1 and the operation screen P2 to display information showing whether the current mode is the short-distance mode or the long-distance mode. For example, on the map screen P1, the operation control unit 21 may display, in different colors, the icon image of the work vehicle 10 set in the short-distance mode and the icon image of the work vehicle 10 set in the long-distance mode.

### [Short-distance operation terminal 30]

The short-distance operation terminal 30 includes a portable terminal such as a smartphone, a tablet terminal, or a remote controller. The short-distance operation terminal 30 may have the same function as the long-distance operation terminal 20. The short-distance operation terminal 30 is connected to the work vehicle 10 by Bluetooth, for example, within a predetermined range with the work vehicle 10 as a reference.

The short-distance operation terminal 30 may be capable of receiving an operation instruction for controlling the operation of the work vehicle 10, in addition to the start instruction and a stop instruction for automatic traveling. For example, the short-distance operation terminal 30 receives, from the worker, a setting operation and a changing operation for a vehicle speed and an engine speed of the work vehicle 10, an ascending and descending operation for the work machine 14, an operation of approaching a ridge, and the like. For example, the short-distance operation terminal 30 includes an operation unit that receives the setting operation and the changing operation for a vehicle speed and an engine speed of the work vehicle 10, the ascending and descending operation for the work machine 14, and the operation of approaching a ridge. The worker can give an operation instruction to control the operation of the work vehicle 10 in a state where the work vehicle 10 can be visually observed in the field. The short-distance operation terminal 30 outputs the operation instruction received from the worker to the work vehicle 10.

Here, the short-distance operation terminal 30 may be configured to permit an operation instruction for controlling the operation of the work vehicle 10 when the mode is set to the short-distance mode. That is, the automatic traveling system 1 sets an operation content for which the operation of the work vehicle 10 can be controlled by the short-distance operation terminal 30, depending on whether the set mode is the short-distance mode or the long-distance mode.

The automatic traveling system 1 has a configuration for controlling the operation of the work vehicle 10 in accordance with the set mode (the short-distance mode, the long-distance mode). Note that the short-distance operation terminal 30 may display information showing whether the current mode is the short-distance mode or the long-distance mode on an operation screen, a lamp, or the like of the short-distance operation terminal 30. Further, the operation terminal (the present terminal) mounted on the work vehicle 10 may also display information showing whether the current mode is the short-distance mode or the long-distance mode.

As described above, in the automatic traveling system 1, a plurality of operation terminals (the long-distance operation terminal 20, the short-distance operation terminal 30) can be used in combination for one work vehicle 10. Here, in a case where a plurality of operation terminals are used in combination, when the work vehicle 10 can be operated from each operation terminal, there arises a problem that the work vehicle 10 performs an operation not intended by the operator. For example, in a case where the observer who is monitoring the work vehicle 10 with the long-distance operation terminal 20 does not want to start (restart) automatic traveling of the work vehicle 10, if the worker in the vicinity of the work vehicle 10 gives the start instruction for automatic traveling from the short-distance operation terminal 30, there arises a problem that automatic traveling is started against the intention of the observer. In addition, in a case where one work vehicle 10 is monitored by two long-distance operation terminals 20, if one observer gives the start instruction for automatic traveling with the long-distance operation terminal 20, there arises a problem that automatic traveling is started against the intention of another observer.

In view of the above problem, the automatic traveling system 1 according to the present embodiment has a configuration capable of appropriately controlling the operation of the work vehicle 10. Specifically, the automatic traveling system 1 has a configuration in which an authority to give an instruction related to automatic traveling to the work vehicle 10 is set to an operation terminal (the long-distance operation terminal 20, the short-distance operation terminal 30) or an operator on the basis of a predetermined condition, and the work vehicle 10 is operated on the basis of an instruction given from the operation terminal or the operator to which the authority is set. For example, the management server 40 has a configuration for setting the authority to the operation terminal or the operator.

### [Management server 40]

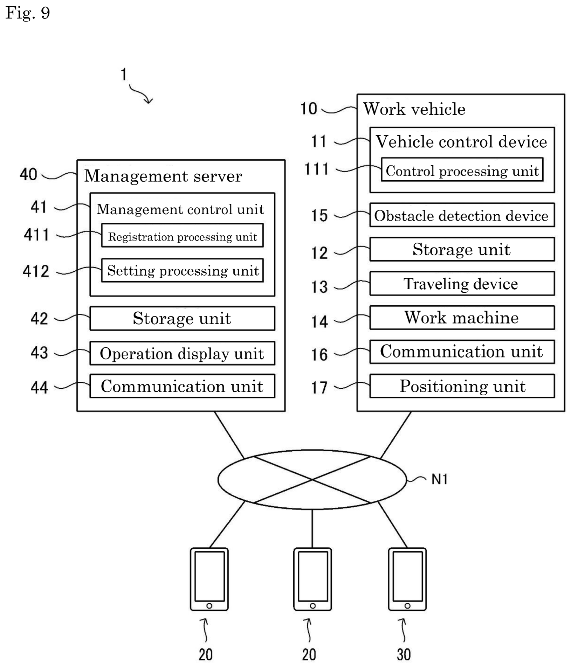

As shown in Fig. 9, the management server 40 is an information processing apparatus (server device) including a management control unit 41, a storage unit 42, an operation display unit 43, a communication unit 44, and the like. For example, the management server 40 includes a personal computer or the like. Note that the management server 40 may be configured by a cloud server.

The communication unit 44 is a communication interface for connecting the management server 40 to the communication network N1 in a wired or wireless manner, and executing data communication according to a predetermined communication protocol, with an external device such as one or a plurality of operation terminals (the long-distance operation terminal 20, the short-distance operation terminal 30) via the communication network N1.

The operation display unit 43 is a user interface including a display unit such as a liquid crystal display or an organic EL display that displays various types of information, and an operation unit such as a touch panel, a mouse, or a keyboard that receives an operation.

The storage unit 42 is a non-volatile storage unit such as an HDD, an SSD, or a flash memory that stores various types of information. The storage unit 42 stores a control program such as an operation control program for causing the management control unit 41 to execute operation control processing (see Fig. 13) to be described later. For example, the operation control program is non-temporarily recorded in a computer-readable recording medium such as a CD or a DVD, and is read by a predetermined reading device (not shown) and stored in the storage unit 42. Note that the operation control program may be downloaded from a server (not shown) to the management server 40 via the communication network N1 and stored in the storage unit 42.

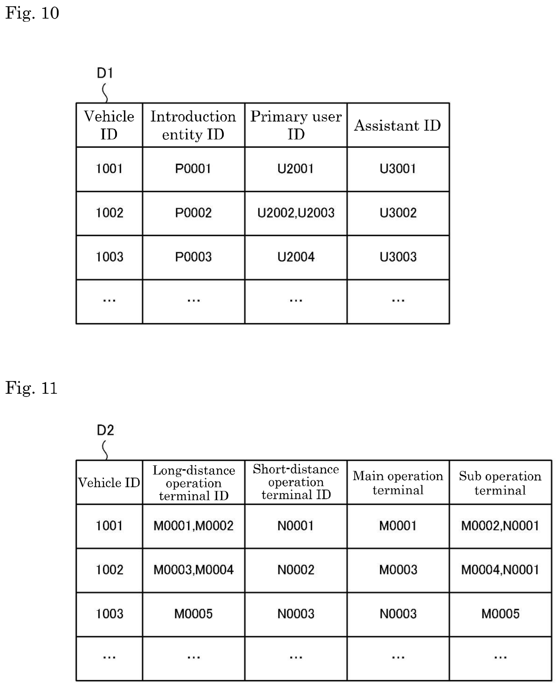

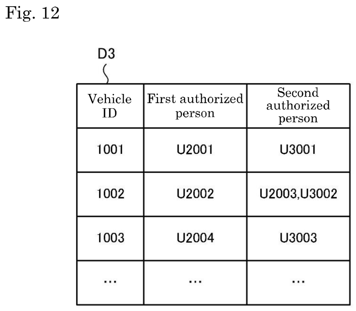

In addition, the storage unit 42 stores data such as vehicle registration information D1 (see Fig. 10) related to the work vehicle 10, terminal setting information D2 (see Fig. 11) related to an operation terminal capable of giving an operation instruction for the work vehicle 10, and authorized person setting information D3 (see Fig. 12) related to an authorized person having an authority to give an operation instruction to the work vehicle 10.

As shown in Fig. 10, in the vehicle registration information D1, identification information (vehicle ID) of the work vehicle 10, identification information (introduction entity ID) of an introduction entity (an agricultural corporation, management corporation, or the like) that introduces the work vehicle 10, identification information (primary user ID) of a primary user of the work vehicle 10, and identification information (assistant ID) of an assistant are registered in association with each other for each work vehicle 10. Note that the "primary user" is a user having an operation authority for all of the work vehicle 10, and can give, for example, a start instruction for automatic traveling, a stop instruction for automatic traveling, a change instruction for a vehicle speed and an engine speed, an ascending and descending instruction for the work machine 14, an instruction to approach a ridge, a set instruction for work, and the like. In this regard, the "assistant" is a user exclusively having some operation authorities of the work vehicle 10, and can exclusively give, for example, the stop instruction for automatic traveling and the instruction to approach a ridge.

As shown in Fig. 11, in the terminal setting information D2, identification information (terminal ID) of an operation terminal (the long-distance operation terminal 20, the short-distance operation terminal 30) capable of giving an operation instruction for the work vehicle 10, identification information (terminal ID) of an operation terminal (main operation terminal) to which the first authority is set, and identification information (terminal ID) of an operation terminal (sub operation terminal) for which a second authority is set are registered in association with each other for each work vehicle 10. The first authority and the second authority are different in content that can be instructed to the work vehicle 10.

As shown in Fig. 12, in the authorized person setting information D3, identification information (user ID) of an operator having the first authority and identification information (user ID) of an operator having the second authority are registered in association with each other for each work vehicle 10.

As another embodiment, some or all of the information such as the vehicle registration information D1, the terminal setting information D2, and the authorized person setting information D3 may be stored in an operation terminal (for example, the long-distance operation terminal 20).

The management control unit 41 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work region) for various types of processing executed by the CPU. Then, the management control unit 41 controls the management server 40 by executing various control programs stored in advance in the ROM or the storage unit 42 with the CPU.

As shown in Fig. 9, the management control unit 41 includes various processing units such as a registration processing unit 411 and a setting processing unit 412. Note that the management control unit 41 functions as the various processing units by executing, with the CPU, various types of processing according to the operation control program. In addition, some or all of the processing units may include an electronic circuit. Note that the operation control program may be a program for causing a plurality of processors to function as the processing unit.

The registration processing unit 411 registers the vehicle registration information D1, the terminal setting information D2, and the authorized person setting information D3. For example, when the introduction entity newly purchases the work vehicle 10 and makes an application for starting use of the management service, the registration processing unit 411 issues an ID to the introduction entity and registers the vehicle registration information D1 (see Fig. 10) in which the vehicle ID of the work vehicle 10 and the introduction entity ID are associated with each other. For example, when the introduction entity additionally purchases the work vehicle 10 and makes an application for starting use of the management service, the registration processing unit 411 registers the vehicle registration information D1 in which the vehicle ID of the work vehicle 10 and the introduction entity ID are associated with each other. The registration processing unit 411 manages the vehicle ID and the introduction entity ID in association with each other for each work vehicle 10.

In addition, for example, when the introduction entity logs in a management page (not shown) and performs an operation of registering the primary user and the assistant, the registration processing unit 411 issues the primary user ID and the assistant ID, and registers the primary user ID, the assistant ID, and the vehicle ID in the vehicle registration information D1 (see Fig. 10) in association with each other. As shown in Fig. 10, the registration processing unit 411 manages the primary user ID and the assistant ID in association with each other for each work vehicle 10.

In addition, the registration processing unit 411 registers an operation terminal (the long-distance operation terminal 20, the short-distance operation terminal 30) for each work vehicle 10. For example, in a case where the work vehicle 10 as a monitoring target (management target) is registered in the long-distance operation terminal 20, the registration processing unit 411 registers the vehicle ID and identification information (terminal ID) of the long-distance operation terminal 20 in association with each other (see Fig. 11). Further, in a case where the short-distance operation terminal 30 is registered in advance for the work vehicle 10, the registration processing unit 411 acquires and manages the vehicle ID and identification information (terminal ID) of the short-distance operation terminal 30.

To the operation terminal (the long-distance operation terminal 20, the short-distance operation terminal 30) or the operator, the setting processing unit 412 sets (gives) an authority to give an instruction related to automatic traveling to the work vehicle 10 on the basis of a predetermined condition. Specifically, the setting processing unit 412 sets an authority for one work vehicle 10 to a plurality of operation terminals or a plurality of operators, and sets an authority having different contents that can be instructed to the work vehicle 10 for each operation terminal or each operator. A specific example of a method of setting the authority will be described below. Hereinafter, a configuration for setting an authority to an operation terminal (the long-distance operation terminal 20, the short-distance operation terminal 30) ([First example]) and a configuration for setting an authority to an operator ([Second example]) will be described. The setting processing unit 412 is an example of a setting processing unit of the present invention.

### [First example]

The automatic traveling system 1 according to a first example sets (gives) an authority to give an instruction related to automatic traveling to the work vehicle 10, to each operation terminal (the long-distance operation terminal 20, the short-distance operation terminal 30). In addition, for one work vehicle 10, the automatic traveling system 1 sets one operation terminal as the main operation terminal and sets one or a plurality of other operation terminals as the sub operation terminals.

For example, in the operation terminal (main operation terminal) to which the first authority is set, the operator can give a start instruction for automatic traveling, a stop instruction for automatic traveling, a change instruction for a vehicle speed and an engine speed, an ascending and descending instruction for the work machine 14, an instruction to approach a ridge, and a set instruction for work. In addition, in the operation terminal (sub operation terminal) to which the second authority is set, the operator can exclusively give the stop instruction for automatic traveling and the instruction to approach a ridge. As described above, the automatic traveling system 1 sets different authorities for a plurality of operation terminals, and sets a content that can be instructed to the work vehicle 10 for each operation terminal according to the authority.

For example, in a case where two long-distance operation terminals 20 and one short-distance operation terminal 30 are registered for the work vehicle 10a, the setting processing unit 412 sets the first authority to one long-distance operation terminal 20 and sets the second authority to another long-distance operation terminal 20 and the short-distance operation terminal 30. In addition, the setting processing unit 412 sets one long-distance operation terminal 20 as the main operation terminal, and sets another long-distance operation terminal 20 and the short-distance operation terminal 30 as the sub operation terminals.

Specifically, when the mode is set to the long-distance mode, the setting processing unit 412 sets one of the two long-distance operation terminals 20 as the main operation terminal. For example, the setting processing unit 412 sets, as the main operation terminal, the long-distance operation terminal 20 that has first received the start instruction (travel start instruction for automatic traveling) from the operator (observer) among the two long-distance operation terminals 20, and sets another long-distance operation terminal 20 as the sub operation terminal.

For example, in a case where the map screen P1 (see Fig. 4) is displayed on each of two long-distance operation terminals 20A and 20B, an observer A monitors the work vehicle 10 on the long-distance operation terminal 20A, and an observer B monitors the work vehicle 10 on the long-distance operation terminal 20B, when the observer A selects the work vehicle 10 (for example, the icon image A1 of the work vehicle 10a) and presses the "START" button on the operation screen P2 (see Fig. 7A and the like) on the long-distance operation terminal 20A, the setting processing unit 412 sets, to the long-distance operation terminal 20A, the first authority to operate the work vehicle 10a (sets the long-distance operation terminal 20A as the main operation terminal). In addition, the setting processing unit 412 sets, to the long-distance operation terminal 20B, the second authority to operate the work vehicle 10a (sets the long-distance operation terminal 20B as the sub operation terminal). Further, the setting processing unit 412 sets the second authority to operate the work vehicle 10a, to the short-distance operation terminal 30 corresponding to the work vehicle 10a (sets the short-distance operation terminal 30 as the sub operation terminal).

Further, in the above example, for example, when the worker first gives the start instruction for automatic traveling on the short-distance operation terminal 30 corresponding to the work vehicle 10a, the setting processing unit 412 sets the first authority to operate the work vehicle 10a to the short-distance operation terminal 30 (sets the short-distance operation terminal 30 as the main operation terminal), and sets the second authority to operate the work vehicle 10a to each of the long-distance operation terminals 20A and 20B (sets the long-distance operation terminals 20A and 20B as the sub operation terminals).

As another embodiment, the setting processing unit 412 may perform an operation of setting the authority (the main operation terminal, the sub operation terminal) to an operation terminal selected by an operator (administrator or the like), and set the authority (the main operation terminal, the sub operation terminal) according to the operation. For example, when the administrator selects the main operation terminal and the sub operation terminal (the first authority and the second authority) for the work vehicle 10a when registering a work plan of the work vehicle 10a, the setting processing unit 412 sets the main operation terminal and the sub operation terminal (the first authority and the second authority) for the work vehicle 10a. The administrator selects the main operation terminal and the sub operation terminal (the first authority and the second authority) for each work vehicle 10.

In this way, the setting processing unit 412 sets the authority to the operation terminal corresponding to the work vehicle 10, or sets the main operation terminal and the sub operation terminal corresponding to the work vehicle 10. For example, as shown in Fig. 11, the setting processing unit 412 registers the vehicle ID, the terminal ID of the main operation terminal, and the terminal ID of the sub operation terminal in association with each other for each work vehicle 10.

Further, the setting processing unit 412 outputs the terminal setting information D2 (see Fig. 11) to each operation terminal and the work vehicle 10. On the basis of the terminal setting information D2, each operation terminal receives an operation performed by the operator and outputs an operation instruction for the work vehicle 10. The work vehicle 10 controls the operation of the vehicle on the basis of the terminal setting information D2.

For example, the long-distance operation terminal 20A (main operation terminal) to which the first authority for the work vehicle 10a is set permits reception of the start instruction for automatic traveling, a stop instruction for automatic traveling, a change instruction for a vehicle speed and an engine speed, an ascending and descending instruction for the work machine 14, an instruction to approach a ridge, a set instruction for work, and the like, and outputs the instruction to the work vehicle 10a upon receiving the instruction. The control processing unit 111 of the work vehicle 10a controls the operation of the work vehicle 10a according to the instruction. For example, when the mode is set to the long-distance mode and the start instruction (travel start instruction) for automatic traveling is acquired from the long-distance operation terminal 20A as the main operation terminal, the control processing unit 111 starts automatic traveling when the work vehicle 10a satisfies a start condition for automatic traveling. Further, for example, when the mode is set to the long-distance mode and a descending instruction of the work machine 14 is acquired from the long-distance operation terminal 20A as the main operation terminal, the control processing unit 111 causes the work machine 14 to descend.

In addition, for example, in a case where the short-distance operation terminal 30 corresponding to the work vehicle 10a is set as the main operation terminal, when the mode is set to the short-distance mode and the start instruction for automatic traveling is acquired from the short-distance operation terminal 30, the control processing unit 111 starts automatic traveling when the work vehicle 10a satisfies a start condition for automatic traveling.

In contrast, in the long-distance operation terminal 20B (sub operation terminal) and the short-distance operation terminal 30 to which the second authority for the work vehicle 10a is set, reception of the stop instruction for automatic traveling and the instruction to approach a ridge is exclusively permitted, and reception of other instructions is prohibited. For example, the long-distance operation terminal 20B displays the "START" button on the operation screen P2 (see Fig. 7A and the like) in a grayed-out manner, to prohibit reception of the start instruction for automatic traveling. As another embodiment, the control processing unit 111 of the work vehicle 10a may prohibit automatic traveling upon acquiring the start instruction for automatic traveling from the long-distance operation terminal 20B. As described above, in a case where the long-distance operation terminal 20 is set as the sub operation terminal, the start instruction for automatic traveling by the long-distance operation terminal 20 is prohibited even when the mode is set to the long-distance mode.

Note that, when the mode is set to the long-distance mode and the main operation terminal is set to the short-distance operation terminal 30, or when the mode is set to the short-distance mode and the main operation terminal is set to the long-distance operation terminal 20, no operation terminal is able to start automatic traveling. In this case, the automatic traveling system 1 may prompt the operator to switch the mode, or may prompt the operator to switch between the main operation terminal and the sub operation terminal (transfer of the authority).

Here, the setting processing unit 412 may transfer (shift) the authority set to each operation terminal. For example, in a case where the first authority is set to the long-distance operation terminal 20A and the second authority is set to the long-distance operation terminal 20B and the short-distance operation terminal 30 for the work vehicle 10a (see Fig. 11), the setting processing unit 412 may change the set content afterward. For example, when communication between the long-distance operation terminal 20A and the work vehicle 10a is interrupted during automatic traveling of the work vehicle 10a, the setting processing unit 412 sets the first authority to the long-distance operation terminal 20B or the short-distance operation terminal 30 (sets the long-distance operation terminal 20B or the short-distance operation terminal 30 as the main operation terminal).

For example, in a case where the setting processing unit 412 has set the authority of the first rank to the long-distance operation terminal 20A in advance, the authority of the second rank to the long-distance operation terminal 20B, and the authority of the third rank to the short-distance operation terminal 30, when communication between the long-distance operation terminal 20A and the work vehicle 10a is interrupted, the setting processing unit 412 sets (transfers the authority) the first authority (for example, a start authority for automatic traveling) to the long-distance operation terminal 20B of the second rank. As another embodiment, the setting processing unit 412 may set in advance a transfer destination of the authority to a specific operation terminal, for a case where communication is interrupted. In addition, for example, when the start instruction for automatic traveling is not output from the operation terminal of the transfer destination within predetermined time after the transfer of the start authority for automatic traveling, the setting processing unit 412 may further transfer the start authority to another operation terminal.

As another embodiment, when communication between the long-distance operation terminal 20A and the work vehicle 10a is interrupted, the setting processing unit 412 may notify the operator (observer) of the long-distance operation terminal 20B and the operator (worker) of the short-distance operation terminal 30 of an inquiry as to whether or not to change the second authority to the first authority, and transfer the authority on the basis of an answer of each operator to the inquiry.

As another embodiment, when the communication between the long-distance operation terminal 20A and the work vehicle 10a is interrupted, the setting processing unit 412 may automatically set the first authority to the long-distance operation terminal 20B if the long-distance operation terminal 20B is displaying the operation screen P2 of a camera image, for example, and may automatically set the first authority to the short-distance operation terminal 30 if the long-distance operation terminal 20B is not displaying the operation screen P2 of a camera image (see Fig. 7A and the like).

When the authority is transferred, the setting processing unit 412 may notify each of the operation terminal of the transfer source and the operation terminal of the transfer destination of the transfer of the authority.

As another embodiment, the setting processing unit 412 may transfer the authority on the basis of a request of the operator. For example, when the operator of the long-distance operation terminal 20A set as the main operation terminal makes a request (transfer request) to transfer the first authority set in the long-distance operation terminal 20A to another long-distance operation terminal 20B or the short-distance operation terminal 30, the setting processing unit 412 acquires the transfer request and outputs the transfer request to the transfer destination (the long-distance operation terminal 20B or the short-distance operation terminal 30) designated by the operator. When the operator of the transfer destination accepts the transfer request (agrees to the transfer of the first authority), the setting processing unit 412 transfers the first authority to the operation terminal of the transfer destination. For example, in a case where the operator of the long-distance operation terminal 20A has designated the short-distance operation terminal 30 as the transfer destination and made the transfer request, when the worker of the short-distance operation terminal 30 agrees to the transfer request, the setting processing unit 412 changes the authority of the short-distance operation terminal 30 from the second authority to the first authority, and changes the authority of the long-distance operation terminal 20A from the first authority to the second authority. That is, the setting processing unit 412 changes the short-distance operation terminal 30 from the sub operation terminal to the main operation terminal, and changes the long-distance operation terminal 20A from the main operation terminal to the sub operation terminal.

As another example, when the operator of the long-distance operation terminal 20B or the short-distance operation terminal 30 set as the sub operation terminal makes a request (transfer request) to transfer the first authority set in the long-distance operation terminal 20A to the own operation terminal, the setting processing unit 412 acquires the transfer request and outputs the transfer request to the long-distance operation terminal 20A having the first authority. When the operator of the long-distance operation terminal 20A accepts the transfer request (agrees to the transfer of the first authority), the setting processing unit 412 transfers the first authority to the operation terminal that has requested the transfer. For example, when the observer of the long-distance operation terminal 20B of the sub operation terminal makes the transfer request of the authority of the long-distance operation terminal 20A as the main operation terminal, and the observer of the long-distance operation terminal 20A agrees to the transfer request, the setting processing unit 412 changes the authority of the long-distance operation terminal 20B from the second authority to the first authority, and changes the authority of the long-distance operation terminal 20A from the first authority to the second authority. That is, the setting processing unit 412 changes the long-distance operation terminal 20B from the sub operation terminal to the main operation terminal, and changes the long-distance operation terminal 20A from the main operation terminal to the sub operation terminal. The setting processing unit 412 updates the terminal setting information D2 when the authority of the operation terminal is changed.

As a result, for example, even if the operation terminal having the first authority becomes inoperable (communication abnormality, absence of an operator, failure of an operation terminal, or the like), the first authority can be transferred to another operation terminal, and the operation instruction corresponding to the first authority can be executed.

As another embodiment of the first example, in a case where a video image of the camera 53 can be displayed on the operation terminal to which the authority is set, the automatic traveling system 1 may not set a restriction on a content that can be instructed to the work vehicle 10 according to a distance between the work vehicle 10 and the operation terminal. Whereas, when a video image is not able to be displayed on the operation terminal to which the authority is set, the automatic traveling system 1 may set a restriction on a content that can be instructed to the work vehicle 10 according to a distance. For example, in a case where the operation terminal has a display function for a camera video image, a state of the work vehicle 10 can be checked through the camera video image, and thus a predetermined operation (for example, an automatic traveling start instruction, a start of movement between fields, a state change of the work machine 14, and the like) is permitted. In contrast, for example, in a case where the short-distance operation terminal 30 does not have a display function for a camera video image and a communication distance is restricted, the predetermined operation is permitted on condition that the distance between the short-distance operation terminal 30 and the work vehicle 10 is less than a predetermined distance, and the predetermined operation is prohibited when the distance is equal to or greater than the predetermined distance. Note that, if no camera video image is displayed even in the operation terminal capable of displaying the camera video image, the restriction according to the distance may be provided.

Further, as another embodiment, the setting processing unit 412 may set an authority (first authority) to an operation terminal that is not registered for the work vehicle 10. Further, after automatic traveling of the work vehicle 10 is started, the setting processing unit 412 may permit a change of the operation terminal to which the authority is set or a change of the authority (switching between the first authority and the second authority) when the automatic traveling is stopped.

Further, the authority transfer processing may be permitted when the work vehicle 10 is stopped. For example, after automatic traveling of the work vehicle 10 is started, the setting processing unit 412 permits the transfer of the authority (change of the operation terminal to which the authority is set) when the automatic traveling is stopped, and prohibits the transfer of the authority during automatic traveling.

In addition, as another embodiment, when an abnormality occurs in the work vehicle 10 in a case where the operation terminal to which the authority is set is separated from the work vehicle 10 by a predetermined distance or more, the setting processing unit 412 may transfer the authority to another operation terminal located at a distance less than the predetermined distance from the work vehicle 10. For example, in a case where the work vehicle 10 detects an obstacle during automatic traveling and temporarily stops (stops), when an operation terminal is located at a distance less than the predetermined distance from the work vehicle 10, the setting processing unit 412 sets the first authority to the operation terminal. In this case, after removing the obstacle detected by the work vehicle 10, the operator of the operation terminal gives a start instruction for automatic traveling by the operation terminal. As a result, the work vehicle 10 restarts the automatic traveling.

### [Second example]

The automatic traveling system 1 according to a second example sets (gives), to an operator, an authority to give an instruction related to automatic traveling to the work vehicle 10. In addition, for one work vehicle 10, the automatic traveling system 1 sets a first authority to one operator and sets a second authority to one or a plurality of other operators.

For example, the operator (first authorized person) to which the first authority is set can give a start instruction for automatic traveling, a stop instruction for automatic traveling, a change instruction for a vehicle speed and an engine speed, an ascending and descending instruction for the work machine 14, an instruction to approach a ridge, and a set instruction for work. In addition, the operator (second authorized person) to which the second authority is set can exclusively give the stop instruction for automatic traveling and the instruction to approach a ridge. As described above, the automatic traveling system 1 sets different authorities for a plurality of operators, and sets a content that can be instructed to the work vehicle 10 for each operator according to the authority.

For example, in a case where a primary user and an assistant are registered for the work vehicle 10a (see Fig. 10), the setting processing unit 412 sets the first authority to the primary user and sets the second authority to the assistant. Further, for example, in a case where a plurality of primary users are registered for one work vehicle 10, the setting processing unit 412 sets the first authority to any one of the primary users and sets the second authority to other primary users. Note that, for example, the primary user is qualified to be the first authorized person and the second authorized person, but the assistant is qualified to be the second authorized person alone and is not qualified to be the first authorized person.

As another embodiment, the setting processing unit 412 may set the first authority to an operator who has performed a specific operation among the plurality of operators. For example, the setting processing unit 412 sets the first authority to an operator who has first given a start instruction for automatic traveling (travel start instruction) among the plurality of operators, and sets the second authority to other operators. For example, when an operator (observer A) inputs a user ID (for example, the primary user ID) on the long-distance operation terminal 20 to log in, selects the work vehicle 10a, and presses the "START" button on the operation screen P2 (see Fig. 7A and the like), the setting processing unit 412 sets the first authority to the observer A in association with the work vehicle 10a. Further, the setting processing unit 412 sets the second authority to other operator in association with the work vehicle 10a.

As another example, the setting processing unit 412 may set the first authority corresponding to the work vehicle 10 to an operator who has first selected the work vehicle 10 on the map screen P1 (see Fig. 4), among the plurality of operators. For example, when the operator (observer A) inputs a user ID (for example, the primary user ID) on the long-distance operation terminal 20 to log in and selects the work vehicle 10a on the map screen P1, the setting processing unit 412 sets the first authority to the observer A in association with the work vehicle 10a. Further, the setting processing unit 412 sets the second authority to other operator in association with the work vehicle 10a.

As another embodiment, the administrator may perform an operation of setting the authority to an operator in advance, and the setting processing unit 412 sets an authority according to the operation. For example, when the administrator selects the first authorized person and the second authorized person for the work vehicle 10a at a time of registering a work plan of the work vehicle 10a, the setting processing unit 412 sets the first authorized person and the second authorized person for the work vehicle 10a. The administrator selects the first authorized person and the second authorized person for each of the work vehicles 10.

As described above, the setting processing unit 412 sets the authority to the operator corresponding to the work vehicle 10, or sets the first authorized person and the second authorized person corresponding to the work vehicle 10. For example, as shown in Fig. 12, the setting processing unit 412 registers a vehicle ID, an ID of the first authorized person, and an ID of the second authorized person in association with each other for each work vehicle 10. For example, the long-distance operation terminal 20 may display the first authorized person and the second authorized person corresponding to the work vehicle 10 on the map screen P1 (see Fig. 4) to be identifiable.

Further, the setting processing unit 412 outputs the authorized person setting information D3 to each operation terminal and the work vehicle 10. Each operation terminal receives an operation of an operator and outputs an instruction to the work vehicle 10 on the basis of the authorized person setting information D3. The work vehicle 10 controls the operation of the vehicle on the basis of the authorized person setting information D3.

For example, when an operator (first authorized person) who has the first authority for the work vehicle 10a logs in to the long-distance operation terminal 20A, the long-distance operation terminal 20A permits reception of a start instruction for automatic traveling, a stop instruction for automatic traveling, a change instruction for a vehicle speed and an engine speed, an ascending and descending instruction for the work machine 14, an instruction to approach a ridge, a set instruction for work, and the like, and outputs the instruction to the work vehicle 10a upon receiving the instruction. The control processing unit 111 of the work vehicle 10a controls the operation of the work vehicle 10a according to the instruction. For example, when the mode is set to the long-distance mode and the start instruction for automatic traveling is acquired from the long-distance operation terminal 20A to which the first authorized person has logged in, the control processing unit 111 starts automatic traveling when the work vehicle 10a satisfies a start condition for automatic traveling. For example, when the mode is set to the long-distance mode and the control processing unit 111 acquires a descending instruction of the work machine 14 from the long-distance operation terminal 20A to which the first authorized person has logged in, the control processing unit causes the work machine 14 to descend.

In addition, for example, in a case where the first authorized person corresponding to the work vehicle 10a logs in to the short-distance operation terminal 30, when the mode is set to the short-distance mode and the start instruction for automatic traveling is acquired from the short-distance operation terminal 30, the control processing unit 111 starts automatic traveling when the work vehicle 10a satisfies a start condition for automatic traveling.

In contrast, when the operator (second authorized person) to which the second authority is set for the work vehicle 10a logs in to the long-distance operation terminal 20A, the long-distance operation terminal 20A exclusively permits reception of the stop instruction for automatic traveling and the instruction to approach a ridge, and prohibits reception of other instructions. For example, the long-distance operation terminal 20A displays the "START" button on the operation screen P2 (see Fig. 7A and the like) in a grayed-out manner, to prohibit reception of the start instruction for automatic traveling from the second authorized person. As another embodiment, the control processing unit 111 of the work vehicle 10a may prohibit automatic traveling upon acquiring the start instruction for automatic traveling from the long-distance operation terminal 20A to which the second authorized person has logged in. In this way, when the second authorized person logs in, the start instruction for automatic traveling is prohibited.

Here, the setting processing unit 412 may transfer (shift) the authority set to each operator. Specifically, the setting processing unit 412 may transfer the authority on the basis of a request from the operator. For example, when an operator X to which the first authority is set makes a request (transfer request) to transfer the first authority to an operator Y, the setting processing unit 412 acquires the transfer request and outputs the transfer request to the operator Y. When the operator Y accepts the transfer request (agrees to the transfer of the first authority), the setting processing unit 412 transfers the first authority to the operator Y. That is, the setting processing unit 412 changes the operator X from the first authorized person to the second authorized person, and changes the operator Y from the second authorized person to the first authorized person.

As another example, when the operator Y to which the second authority is set makes a request (transfer request) to transfer the first authority to the operator Y, the setting processing unit 412 acquires the transfer request and outputs the transfer request to the operator X having the first authority. When the operator X accepts the transfer request (agrees to the transfer of the first authority), the setting processing unit 412 transfers the first authority to the operator Y who has requested the transfer. That is, the setting processing unit 412 changes the operator Y from the second authorized person to the first authorized person, and changes the operator X from the first authorized person to the second authorized person. The setting processing unit 412 updates the authorized person setting information D3 when the authority of the operator is changed.

As a result, for example, even if the operator having the first authority becomes inoperable (absent or the like), the first authority can be transferred to another operator and the operation instruction corresponding to the first authority can be executed.

As another embodiment of the second example, for example, the setting processing unit 412 may give a start authority for automatic traveling to an operator who has appeared first in a captured image of the camera 53 at a time of starting automatic traveling (for example, a primary user detected in a camera image among a plurality of registered primary users). The operator who is given the start authority can cause the long-distance operation terminal 20 and the short-distance operation terminal 30 to start automatic traveling. Further, an operator having no start authority is prohibited from performing the start operation for automatic traveling. Note that, the operator having no start authority is permitted to stop the work vehicle 10 that is automatically traveling.

Further, as another embodiment, for example, in a case where an operator to which the start authority is given has not performed a predetermined operation (automatic traveling start operation) within predetermined time, the setting processing unit 412 may cancel the start authority of the operator and transfer the start authority to another operator. That is, the setting processing unit 412 may cancel the start authority due to timeout. Upon canceling the start authority, the setting processing unit 412 transfers the start authority to another operator.

In addition, instead of the timeout configuration, the setting processing unit 412 may cancel the start authority when automatic traveling is interrupted in the short-distance operation terminal 30 and the long-distance operation terminal 20. In this case, the setting processing unit 412 may transfer the start authority to another operator who has appeared in a captured image of the camera 53 when automatic traveling is restarted. In addition, the setting processing unit 412 may transfer the start authority to an operator who has performed an operation of restarting automatic traveling after temporarily stopping the work vehicle 10.

Further, as another embodiment, the setting processing unit 412 may set an authority (first authority) to an operator who is not registered for the work vehicle 10. Further, after automatic traveling of the work vehicle 10 is started, the setting processing unit 412 may permit a change of the operator to which the authority is set when the automatic traveling is stopped.

Further, the authority transfer processing may be permitted when the work vehicle 10 is stopped. For example, after automatic traveling of the work vehicle 10 is started, the setting processing unit 412 permits transfer of the authority (change of the operator to which the authority is set) when the automatic traveling is stopped.

As another embodiment of the first example and the second example described above, the setting processing unit 412 may change a content that can be instructed for each authority. Specifically, the setting processing unit 412 may allow an operator to change a content that can be instructed with the first authority and a content that can be instructed with the second authority. Further, the setting processing unit 412 may be able to set an operation content of the same authority according to an operation terminal or an operator. For example, in a case where a plurality of sub operation terminals are set, the setting processing unit 412 may be able to set and change a content that can be instructed for each sub operation terminal. That is, the content of the first authority may be different for each operation terminal, or the content of the second authority may be different for each operation terminal.

### [Operation control processing]

Hereinafter, an example of operation control processing executed by the automatic traveling system 1 will be described with reference to Fig. 13.

Note that, the present invention can be understood as an invention of an operation control method for executing one or a plurality of steps included in the operation control processing (an example of an operation control method of the present invention). Furthermore, one or a plurality of steps included in the operation control processing described here may be appropriately omitted. Note that an execution order of each step in the operation control processing may be different within a range in which similar operational effects are produced. Furthermore, here, a case where the vehicle control device 11 and the management control unit 41 execute each step in the operation control processing will be described as an example, but an operation control method in which one or a plurality of processors dispersedly execute each step in the operation control processing is also considered as another embodiment.

Furthermore, here, operation control processing corresponding to the first example will be described.

### <Step S1>

In step S1, the vehicle control device 11 sets a mode for controlling the operation of the work vehicle 10. Specifically, the vehicle control device 11 sets the short-distance mode or the long-distance mode. For example, the vehicle control device 11 sets the short-distance mode or the long-distance mode according to a mode selected by an operator on an operation terminal (the present terminal) mounted on the work vehicle 10.

### <Step S2>

In step S2, the management control unit 41 sets an authority to each of a plurality of operation terminals that output operation instructions to the work vehicle 10. Specifically, the management control unit 41 sets an authority to each of the long-distance operation terminals 20A and 20B and the short-distance operation terminal 30. For example, the management control unit 41 sets, to any one of the operation terminals, the first authority that allows all operation instructions, and sets, to other two operation terminals, the second authority that exclusively allows some operation instructions. That is, the management control unit 41 sets any one operation terminal as the main operation terminal, and sets other two operation terminals as the sub operation terminals. The management control unit 41 registers setting information in the terminal setting information D2 (see Fig. 11).

### <Step S3>

In step S3, the vehicle control device 11 determines whether or not an automatic traveling start instruction (travel start instruction) has been acquired. When the vehicle control device 11 acquires the travel start instruction (S3: Yes), the process proceeds to step S4. The vehicle control device 11 waits until the travel start instruction is acquired (S3: No). Specifically, when the vehicle control device 11 acquires the travel start instruction from the main operation terminal to which the first authority including the start authority for automatic traveling is set, the process proceeds to step S4. In contrast, when the vehicle control device 11 acquires the travel start instruction from the sub operation terminal to which the second authority not including the start authority for automatic traveling is set, the vehicle control device 11 may notify the operation terminal of error information.

### <Step S4>

In step S4, the vehicle control device 11 causes the work vehicle 10 to start automatic traveling. The work vehicle 10 starts automatic traveling according to a target route, and performs predetermined work in a work region.

### <Step S5>

In step S5, the management control unit 41 determines whether or not an abnormality has occurred in the main operation terminal to which the first authority is set. For example, when communication between the main operation terminal and the work vehicle 10 is interrupted, the management control unit 41 determines that an abnormality has occurred in the main operation terminal. When an abnormality occurs in the main operation terminal (S5: Yes), the management control unit 41 causes the process to proceed to step S6. Whereas, if no abnormality has occurred in the main operation terminal (S5: No), the management control unit 41 causes the process to proceed to step S10.

### <Step S6>

In step S6, the vehicle control device 11 stops automatic traveling of the work vehicle 10. The work vehicle 10 stops automatic traveling and stops the work. As described above, when an abnormality occurs in the main operation terminal, the vehicle control device 11 temporarily stops (stops) the work vehicle 10.

### <Step S7>

In step S7, the management control unit 41 transfers (shifts) the start authority for starting automatic traveling of the work vehicle 10 to another operation terminal. For example, the management control unit 41 transfers the start authority to a preset operation terminal or an operation terminal designated by the operator.

### <Step S8>

In step S8, the vehicle control device 11 determines whether or not a travel start instruction has been acquired from the operation terminal to which the start authority has been transferred. When the vehicle control device 11 acquires the travel start instruction (S8: Yes), the process proceeds to step S9. If no travel start instruction has been acquired (S8: No), the vehicle control device 11 determines whether or not predetermined time has elapsed in step S81. When the predetermined time has elapsed without acquisition of the travel start instruction from the operation terminal to which the start authority has been transferred (S81: Yes), the vehicle control device 11 returns the process to step S7 and further transfers the start authority to another operation terminal. The vehicle control device 11 waits for a travel start instruction from another operation terminal until predetermined time elapses after the start authority is transferred to the mentioned another operation terminal (S81: No).

### <Step S9>

In step S9, the vehicle control device 11 causes the work vehicle 10 to restart automatic traveling. The work vehicle 10 restarts the automatic traveling according to the target route, and restarts the predetermined work in the work region.

### <Step S10>

In step S10, the vehicle control device 11 determines whether or not the work vehicle 10 has reached a travel end position. When the work vehicle 10 reaches the travel end position (S10: Yes), the vehicle control device 11 ends the vehicle control processing. If the work vehicle 10 has not reached the travel end position (S10: No), the vehicle control device 11 causes the process to proceed to step S5 and continues automatic traveling.

The automatic traveling system 1 executes the vehicle control processing as described above. Further, the automatic traveling system 1 executes the vehicle control processing in parallel for each work vehicle 10.

As described above, the automatic traveling system 1 according to the present embodiment controls the operation of the work vehicle 10 that performs agricultural work by automatic traveling. Specifically, the automatic traveling system 1 sets, to an operation terminal or an operator, an authority to give an instruction related to automatic traveling to the work vehicle 10 on the basis of a predetermined condition, and operates the work vehicle 10 on the basis of an instruction given from the operation terminal or operator to which the authority is set. Specifically, the automatic traveling system 1 sets the authority for one work vehicle 10 to a plurality of operation terminals or a plurality of operators, sets different authorities to a plurality of operation terminals or a plurality of operators, and sets a content that can be instructed to the work vehicle 10 for each operation terminal or each operator according to the authority. For example, the automatic traveling system 1 sets the first authority including the start authority for automatic traveling to the long-distance operation terminal 20 or a primary user, and sets the second authority not including the start authority for automatic traveling to the short-distance operation terminal 30 or an assistant.

According to the configuration described above, for example, in a case where the long-distance operation terminal 20 and the short-distance operation terminal 30 are registered as operation terminals that can give an operation instruction to one work vehicle 10, a start of automatic traveling is permitted exclusively from the long-distance operation terminal 20. Further, in a case where a primary user and an assistant are registered as operators who can give an operation instruction to one work vehicle 10, a start of automatic traveling is permitted exclusively from the primary user. As a result, for example, it is possible to inhibit a situation in which start instructions for automatic traveling are given from a plurality of operation terminals to the work vehicle 10 or start instructions for automatic traveling are given from a plurality of operators to the work vehicle 10. Therefore, the operation of the work vehicle 10 can be appropriately controlled.

### [Other embodiments]

Hereinafter, another embodiment of the automatic traveling system 1 will be described.

In the above-described embodiment, the automatic traveling system 1 sets an authority for one work vehicle 10 to a plurality of operation terminals or a plurality of operators. However, as another embodiment, the automatic traveling system 1 may set an authority for a plurality of work vehicles 10 to one operation terminal or one operator. For example, in a case where one operation terminal manages the work vehicles 10a and 10b, to the operation terminal, a first authority may be set as an authority to give an operation instruction for the work vehicle 10a, and a second authority may be set as an authority to give an operation instruction for the work vehicle 10b. Similarly, for example, in a case where one operator manages the work vehicles 10a and 10b, to the operator, a first authority may be set as an authority to give an operation instruction for the work vehicle 10a, and a second authority may be set as an authority to give an operation instruction for the work vehicle 10b. As described above, the automatic traveling system 1 may set different authorities individually for the work vehicles 10 as management targets.

For example, a plurality of long-distance operation terminals 20 may be registered for each of the plurality of work vehicles 10. In this case, it is difficult for the operator to recognize which long-distance operation terminal 20 and which work vehicle 10 are associated with each other. Therefore, in the automatic traveling system 1, for example, when the operator performs a predetermined operation on the long-distance operation terminal 20, the work vehicle 10 registered in association with the long-distance operation terminal 20 outputs visual information (for example, turns on a lamp, displays characters) or outputs auditory information (emits a buzzer).

As another embodiment, in the automatic traveling system 1, for example, when the operator performs a predetermined operation in the work vehicle 10, the long-distance operation terminal 20 registered in association with the work vehicle 10 may output visual information, output auditory information, or execute a predetermined operation (vibration).

In the above-described embodiment, the management server 40 sets the authority to the operation terminal or the operator, but each operation terminal may set the authority to the own terminal or the operator, as another embodiment. For example, in a specific operation terminal, in a case where an authority is set to each operation terminal, information on the set authority (terminal setting information D2 (see Fig. 11)) may be shared by the individual operation terminals. In this case, each operation terminal may determine whether or not an operation instruction can be made with reference to the information on the authority of the own terminal. Further, in the automatic traveling system 1, the management server 40 may be omitted.

In addition, for example, in a specific operation terminal, in a case where an authority is set to each operator, information on the set authority may be shared among the individual operation terminals. In this case, each operation terminal may refer to the information on the authority of the operator (the authorized person setting information D3 (see Fig. 12)), specify the authority of the operator who has logged in, and determine whether or not an operation instruction can be made.

As another embodiment, information on an authority set for each operation terminal or information on an authority set for each operator may be registered in each work vehicle 10. In this case, the work vehicle 10 may refer to the information, determine whether or not the operation terminal or the operator that has given the operation instruction has a predetermined authority, and determine whether or not the operation can be made.

As described above, in the above-described embodiment, the automatic traveling system 1 corresponds to an operation control system according to the present invention, but the operation control system according to the present invention may be configured by the management server 40 alone, may be configured by the vehicle control device 11 alone, or may be configured by the long-distance operation terminal 20 and the short-distance operation terminal 30.

### [Additional note of invention]

Hereinafter, an outline of the invention extracted from the embodiment will be additionally described. Note that configurations and processing functions, which are described in the following additional notes, can be selected and freely combined.

### <Additional Note 1>

An operation control method for controlling an operation of a work vehicle that performs agricultural work by automatic traveling,
the operation control method including:
setting, to an operation terminal or an operator, an authority to give an instruction related to automatic traveling to the work vehicle based on a predetermined condition; and
operating the work vehicle based on an instruction given from the operation terminal or the operator to which the authority is set.

<Additional Note 2>

The operation control method according to Additional Note 1, including:
setting the authority for one of the work vehicle to a plurality of the operation terminals or a plurality of the operators; and
setting the authorities having different contents that can be instructed to the work vehicle, respectively to the operation terminals or the operators.

### <Additional Note 3>

The operation control method according to Additional Note 2, including permitting a change of the operation terminal or the operator to which the authority is set or a change of the authority, when the automatic traveling is stopped after automatic traveling of the work vehicle is started.

### <Additional Note 4>

The operation control method according to Additional Note 2 or 3, in which a content that can be instructed can be changed for each of the authorities.

### <Additional Note 5>

The operation control method according to any one of Additional Notes 1 to 4, including setting the authority to the operation terminal selected by an operator from among a plurality of the operation terminals registered in advance.

### <Additional Note 6>

The operation control method according to any one of Additional Notes 1 to 5, including setting the authority to the operator who has performed a specific operation among a plurality of the operators registered in advance.

### <Additional Note 7>

The operation control method according to any one of Additional Notes 1 to 6, including setting the authority for a plurality of the work vehicles to one of the operation terminals or one of the operators.

### <Additional Note 8>

The operation control method according to any one of Additional Notes 1 to 7, in which
in a case where a video image is displayable on the operation terminal to which the authority is set, the video image being obtained by a camera that is installed in the work vehicle and captures an image of surroundings of the work vehicle, there is no restriction on a content that can be instructed to the work vehicle according to a distance between the work vehicle and the operation terminal, and
in a case where the video image is not displayable on the operation terminal to which the authority is set, a content that can be instructed to the work vehicle is restricted according to the distance.

### <Additional Note 9>

The operation control method according to any one of Additional Notes 1 to 8, in which when communication between the operation terminal to which the authority is set and the work vehicle is interrupted during automatic traveling of the work vehicle, the authority is transferred to another one of the operation terminal to which the authority is settable.

### <Additional Note 10>

The operation control method according to any one of Additional Notes 1 to 9, in which when an abnormality occurs in the work vehicle in a case where the operation terminal to which the authority is set is separated from the work vehicle by a predetermined distance or more, the authority is transferred to another one of the operation terminal located at a distance less than the predetermined distance from the work vehicle.

### <Additional Note 11>

An operation control program for controlling an operation of a work vehicle that performs agricultural work by automatic traveling,
the operation control program causing one or a plurality of processors to execute:
setting, to an operation terminal or an operator, an authority to give an instruction related to automatic traveling to the work vehicle based on a predetermined condition; and
operating the work vehicle based on an instruction given from the operation terminal or the operator to which the authority is set.

### <Additional Note 12>

An operation control system for controlling an operation of a work vehicle that performs agricultural work by automatic traveling,
the operation control system including:
a setting processing unit that sets, to an operation terminal or an operator, an authority to give an instruction related to automatic traveling to the work vehicle based on a predetermined condition; and
an operation processing unit that operates the work vehicle based on an instruction given from the operation terminal or the operator to which the authority is set.

### LIST OF REFERENCE SIGNS

- 1: Automatic traveling system
- 10: Work vehicle
- 11: Vehicle control device
- 14: Work machine
- 15: Obstacle detection device
- 20: Long-distance operation terminal (operation terminal)
- 21: Operation control unit
- 30: Short-distance operation terminal (operation terminal)
- 40: Management server
- 41: Management control unit
- 53: Camera
- 111: Control processing unit (operation processing unit)
- 211: Setting processing unit
- 212: Display processing unit
- 213: Reception processing unit
- 411: Registration processing unit
- 412: Setting processing unit
- A: Observer (operator)
- B: Observer (operator)
- D1: Vehicle registration information
- D2: Terminal setting information
- D3: Authorized person setting information
- P1: Map screen
- P2: Operation screen

## Claims

1. An operation control method for controlling an operation of a work vehicle that performs agricultural work by automatic traveling,
the operation control method comprising:
setting, to an operation terminal or an operator, an authority to give an instruction related to automatic traveling to the work vehicle based on a predetermined condition; and
operating the work vehicle based on an instruction given from the operation terminal or the operator to which the authority is set.

2. The operation control method according to claim 1, comprising:
setting the authority for one of the work vehicle to a plurality of the operation terminals or a plurality of the operators; and
setting the authorities having different contents that can be instructed to the work vehicle, respectively to the operation terminals or the operators.

3. The operation control method according to claim 2, comprising permitting a change of the operation terminal or the operator to which the authority is set or a change of the authority, when the automatic traveling is stopped after automatic traveling of the work vehicle is started.

4. The operation control method according to claim 2, wherein a content that can be instructed can be changed for each of the authorities.

5. The operation control method according to claim 1, comprising setting the authority to the operation terminal selected by an operator from among a plurality of the operation terminals registered in advance.

6. The operation control method according to claim 1, comprising setting the authority to the operator who has performed a specific operation among a plurality of the operators registered in advance.

7. The operation control method according to claim 1, comprising setting the authority for a plurality of the work vehicles to one of the operation terminal or one of the operator.

8. The operation control method according to claim 1 to 7, wherein
in a case where a video image is displayable on the operation terminal to which the authority is set, the video image being obtained by a camera that is installed in the work vehicle and captures an image of surroundings of the work vehicle, there is no restriction on a content that can be instructed to the work vehicle according to a distance between the work vehicle and the operation terminal, and
in a case where the video image is not displayable on the operation terminal to which the authority is set, a content that can be instructed to the work vehicle is restricted according to the distance.

9. The operation control method according to claim 1 to 7, wherein when communication between the operation terminal to which the authority is set and the work vehicle is interrupted during automatic traveling of the work vehicle, the authority is transferred to another one of the operation terminal to which the authority is settable.

10. The operation control method according to claim 1 to 7, wherein when an abnormality occurs in the work vehicle in a case where the operation terminal to which the authority is set is separated from the work vehicle by a predetermined distance or more, the authority is transferred to another one of the operation terminal located at a distance less than the predetermined distance from the work vehicle.

11. An operation control program for controlling an operation of a work vehicle that performs agricultural work by automatic traveling,
the operation control program causing one or a plurality of processors to execute:
setting, to an operation terminal or an operator, an authority to give an instruction related to automatic traveling to the work vehicle based on a predetermined condition; and
operating the work vehicle based on an instruction given from the operation terminal or the operator to which the authority is set.

12. An operation control system for controlling an operation of a work vehicle that performs agricultural work by automatic traveling,
the operation control system comprising:
a setting processing unit that sets, to an operation terminal or an operator, an authority to give an instruction related to automatic traveling to the work vehicle based on a predetermined condition; and
an operation processing unit that operates the work vehicle based on an instruction given from the operation terminal or the operator to which the authority is set.
